(19) Europäisches Patentamt / European Patent Office / Office européen des brevets

(11) **EP 2 507 130 B1**

(12) **FASCICULE DE BREVET EUROPEEN**

(45) Date de publication et mention
de la délivrance du brevet:
**02.03.2016 Bulletin 2016/09**

(21) Numéro de dépôt: **10801607.2**

(22) Date de dépôt: **29.11.2010**

(51) Int Cl.:
***B64C 29/00*** *(2006.01)*     ***B64C 3/00*** *(2006.01)*

(86) Numéro de dépôt international:
**PCT/FR2010/052564**

(87) Numéro de publication internationale:
**WO 2011/067527 (09.06.2011 Gazette 2011/23)**

(54) **DISPOSITIF DE SUSTENTATION ET PROPULSION, ET AERODYNE EQUIPE D'UN TEL DISPOSITIF**

HUB- UND ANTRIEBSVORRICHTUNG SOWIE DAMIT AUGERUSTETES LUFTFAHRZEUG

LIFT AND PROPULSION DEVICE, AND AERODYNE PROVIDED WITH SUCH A DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.12.2009 FR 0958585**

(43) Date de publication de la demande:
**10.10.2012 Bulletin 2012/41**

(73) Titulaire: **Simon, Jean-Michel
92320 Chatillon (FR)**

(72) Inventeur: **Simon, Jean-Michel
92320 Chatillon (FR)**

(74) Mandataire: **Cabinet Plasseraud
66, rue de la Chaussée d'Antin
75440 Paris Cedex 09 (FR)**

(56) Documents cités:
**FR-A- 959 441     GB-A- 951 186
GB-A- 2 321 227     US-A- 2 054 610
US-A- 3 837 600**

# Description

L'invention concerne un dispositif de sustentation/propulsion, et un aérodyne équipé d'un tel dispositif, permettant à l'aérodyne de décoller et d'atterrir verticalement ou sur de courtes distances (aérodyne dit V/STOL, qui est l'acronyme de l'expression anglosaxone : Vertical/Short Take-Off and Landing), ainsi que de pouvoir se mouvoir en vol dans toutes les directions.

L'invention s'applique en particulier aux moyens de transport de charges, en particulier de charges lourdes, que le dispositif est avantageusement destiné à soulever verticalement et à transporter horizontalement en concurrence principalement avec les moyens de levage d'aéronefs « plus légers que l'air » tels que les ballons dirigeables.

De très nombreuses propositions d'aérodynes V/STOL ont déjà été présentées. Mais, à part l'hélicoptère, des avions à rotors pivotants (dits « tilt rotors ») et quelques avions d'armes à déviation de jets, comme le « Harrier », ou à propulseurs d'appoint pour la sustentation au décollage et à l'atterrissage, ces propositions n'ont pas rencontré le succès escompté. On observe aussi, depuis quelques années, un regain d'intérêt pour les engins à hélices carénées intégrées dans la structure desdits engins.

L'absence de succès commercial de ces aérodynes découle de ce qu'ils souffrent tous d'inconvénients majeurs, parmi lesquels on note :

1. leur faible capacité de levage, ce qui les contraint généralement à utiliser des puissances motrices surdimensionnées par rapport à ce qui serait nécessaire pour le vol de croisière : cas des hélicoptères, des avions d'armes, des aérodynes à hélices carénées ;

2. leur prix élevé, qui résulte de l'inconvénient précité, lequel conduit à l'usage de turbines à gaz coûteuses pour gagner en masse sur la motorisation : cas des hélicoptères et des aérodynes à hélices carénées ;

3. le danger de proximité d'une hélice tournante sans protection : cas des hélicoptères et des aérodynes à rotors basculants, et

4. leur difficulté à gérer la phase de transition entre le vol vertical et le vol horizontal : cas des aérodynes à rotors basculants et/ou à hélices carénées.

Pour augmenter la force de sustentation verticale des dispositifs de sustentation/propulsion équipant ces aérodynes V/STOL, il a déjà été proposé, avec une certaine efficacité, des moyens de « soufflage » de voilure. Dans ces réalisations, tout ou partie d'un flux de gaz, généré par un générateur de gaz, comme une turbine à gaz par exemple, est « soufflé(e) » sur des ailes pour générer une force de sustentation verticale importante dans ces conditions. C'est en particulier le cas des réalisations proposées dans les documents de brevets suivants.

Le brevet US 4 447 028, dans lequel le soufflage assuré par des turbo réacteurs d'un aérodyne directement sur l'extrados des ailes fortement cambrées de l'aérodyne permet de raccourcir la distance de décollage, mais ne permet pas de décoller ni d'atterrir verticalement.

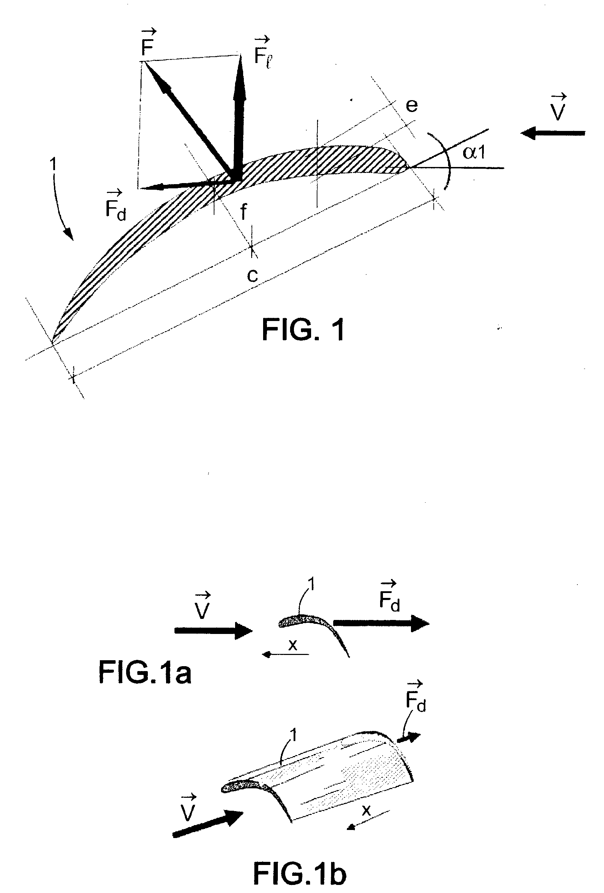

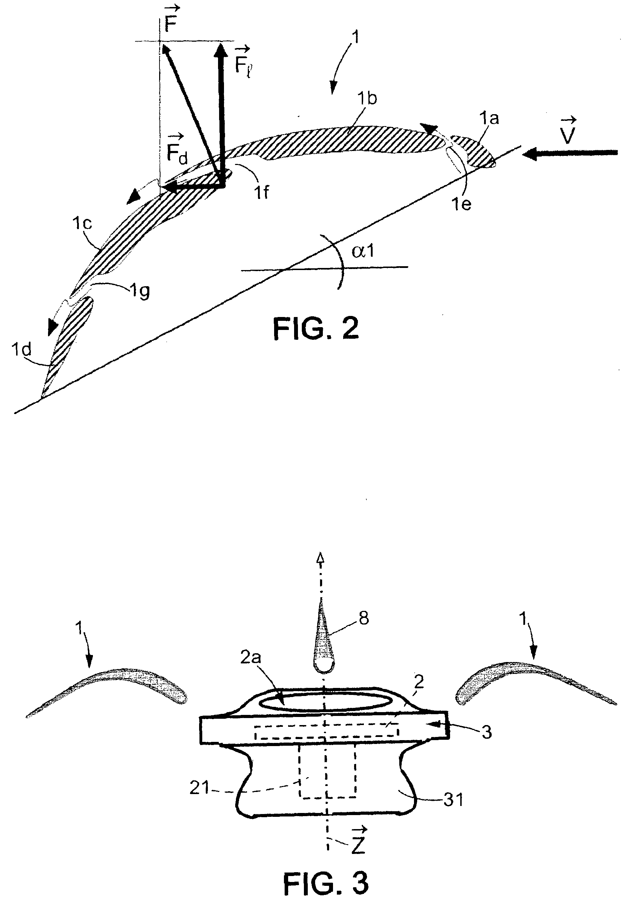

Les brevets US 3 124 323, US 3 276 723, US 3 785 592, US 5 054 713, US 5 170 963 et US 6 382 560 décrivent tous (parmi de nombreux autres exemples encore) des dispositifs à structure(s) circulaire(s), sorte de « soucoupes volantes », dans lesquels un ou plusieurs générateurs de gaz intégrés dans ces structures souffle(nt) un flux d'air sur des voilures périphériques, annulaires ou disposées en cercle autour du centre de la structure. Certains de ces dispositifs peuvent être efficaces pour développer une force de sustentation verticale importante, mais, en revanche, tous ces dispositifs présentent des inconvénients majeurs en vol horizontal, sur les plans notamment de la stabilité, de la résistance à l'avancement (importante force de trainée développée), de la complexité des mécanismes associés à la mobilité nécessaire des voilures, ou, à tout le moins, de parties de voilure, pour passer de l'une à l'autre des différentes configurations de vol, dont surtout, la transition entre le vol vertical et le vol horizontal, et inversement. Le brevet US 5 170 963 précité décrit, comme la majorité des autres brevets précités du même groupe, une structure circulaire comportant des voilures avec volets et disposées tout autour de la structure porteuse circulaire (voir figure 1), ces volets étant mobiles et articulés par des vérins pour pouvoir passer d'une position de portance normale (voir la figure 2 A) à une position de forte portance (configuration dite « hyper sustentatrice », voir figure 2B). On comprend, à l'examen de ce brevet, que, pour obtenir une force de sustentation suffisante, les ailes soufflées doivent être dans une configuration « hyper sustentatrice », qui sera probablement satisfaisante et suffisante pour soulever l'engin. Mais, sachant qu'en vol de croisière horizontal, il faut que ces ailes retrouvent un profil aérodynamique normal, et donc que leurs volets soient « rétractés », on anticipe facilement des difficultés insurmontables ou difficilement surmontables pour atteindre un compromis acceptable entre la portance nécessaire pour que l'aérodyne reste en vol, et la trainée des profils des voilures qui freine l'aérodyne, sans prendre en considération la trainée des actionneurs, tels que des vérins, qui manoeuvrent les volets, quand les profils de voilures sont soumis à un vent transversal.

Ces raisons sont probablement celles pour lesquelles les inventions décrites dans ces documents de brevets n'ont jamais abouti à des réalisations concrètes, observables dans la vie courante.

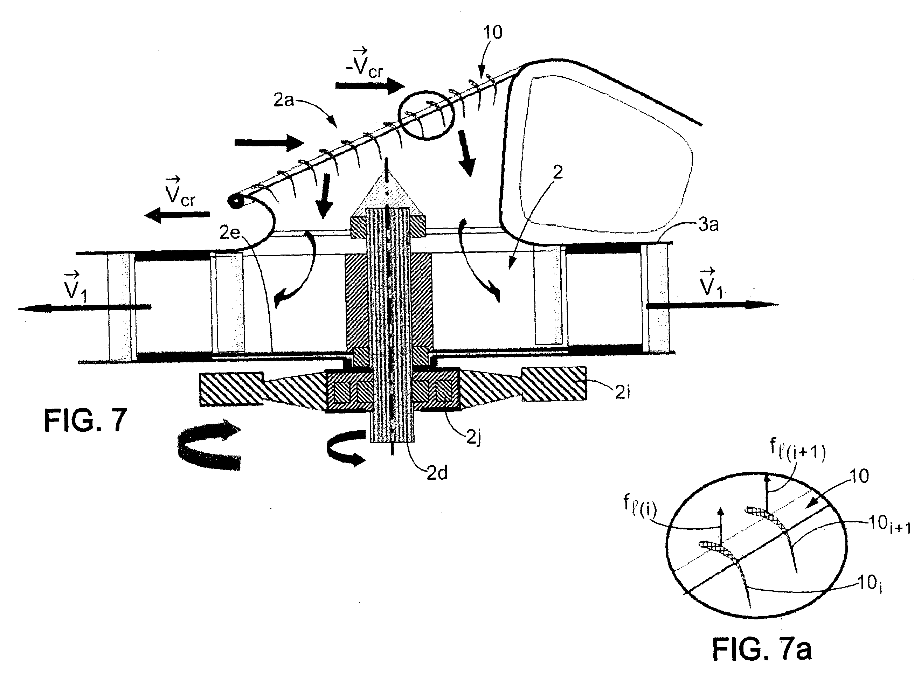

Le brevet US 5 503 351 décrit une combinaison de dispositifs circulaires tels que ceux évoqués ci-dessus avec une structure d'hélicoptère (voir sa figure 1) ou d'un autogire (voir sa figure 7). Le poids du dispositif, et surtout sa complexité ainsi que les forces de trainée générées en vol de croisière rendent ce concept difficilement applicable. La transition entre le vol vertical et le vol horizontal devrait aussi être très difficile à gérer.

Le brevet US 3 837 600 décrit un avion capable de voler dans toute direction à l'aide d'hélices entraînées en rotation chacune dans un carénage respectif dont sont solidaires des voilures sustentatrices respectives, chacun des ensembles carénés -voilures soufflées étant pivotant, à l'avant, au milieu et à l'arrière de l'avion, et latéralement de part et d'autre de la cellule de l'avion, autour d'un axe fixe incliné de haut en bas et de l'extérieur vers l'intérieur dans un plan parallèle au plan défini par les axes de tangage et lacet, avec commande d'un pivotement synchronisé pour les ensembles montés à l'avant et au milieu de l'avion. Cette réalisation a pour inconvénient majeur une très forte traînée induite des ensembles pivotants, ainsi que le coût, la masse et la complexité de réalisation des mécanismes assurant les pivotements synchronisés desdits ensembles.

Par GB 951,186 et GB2,321,227 qui décrit les caractéristiques du préambule de la revendication 1, on connaît des dispositifs de sustentation et propulsion, pour un aérodyne à décollage et atterrissage vertical ou court, par l'effet de portance obtenu par soufflage d'un flux d'air produit par un générateur de flux d'air sur des voilures sustentatrices reliées à une structure porteuse de l'aérodyne, le dispositif comprenant deux voilures longitudinales, sensiblement rectilignes, disposées de part et d'autre de la structure porteuse et s'étendant sensiblement parallèlement à l'axe de roulis du dispositif, les deux voilures longitudinales étant symétriques l'une de l'autre par rapport au plan défini par les axes de roulis et de lacet. De cette façon, la force de résistance à l'avancement (traînée aérodynamique) de ces voilures longitudinales est minimisée lorsque le dispositif se déplace horizontalement dans le sens de son axe de roulis, qui est son axe principal.

Néanmoins, la capacité à générer une portance suffisante par de tels dispositifs de sustentation est douteuse, raison pour laquelle, dans les documents de brevet précités, d'autres dispositifs de sustentation et propulsion plus classiques sont prévus, et se substituent ou se combinent à eux.

Un des buts de l'invention est de pallier à tous ces inconvénients et de proposer un dispositif qui offre une capacité d'emport importante à puissance motrice équivalente, par rapport à des aérodynes à hélices carénées, une capacité à générer une portance significative en maximisant le débit d'air soufflé par rapport à la taille et la masse de la structure porteuse, et une faible pénalité sur la traînée en mode de vol en translation (vol avion), compte-tenu de l'agencement du dispositif de l'invention.

Pour cela, le dispositif proposé utilise des voilures, de préférence, mais pas nécessairement, à forte portance, et dites hyper-sustentatrices, soumises à au moins un flux d'air généré par au moins une soufflante de grand diamètre, et donc d'avoir ainsi des ailes soufflées, et agencées de telle sorte que lesdites voilures offrent une résistance à l'avancement très faible quand l'aérodyne est en vol de croisière horizontal. En outre, cet agencement particulier à la présente invention permet une transition naturelle entre le vol vertical et le vol horizontal.

A cet effet, le dispositif de sustentation et propulsion selon l'invention, du type général connu par GB 951,186 et GB 2,321,227 et tel que présenté ci-dessus, se caractérise en ce que le générateur de flux d'air comprend au moins une soufflante à axe vertical ou faisant un angle maximum d'environ 30° avec l'axe de lacet, et montée dans la structure porteuse avec un diamètre maximum, qui correspond au diamètre extrême de rotation des pales de soufflante, supérieur à 50% de la largeur de la structure porteuse.

Avantageusement, le dispositif de l'invention présente également l'une au moins des caractéristiques suivantes.

La structure porteuse peut présenter, dans la direction d'avancement en vol de croisière, qui est la direction de l'axe de roulis, une longueur supérieure à sa largeur, dans la direction de l'axe de tangage du dispositif, et de préférence la longueur de la structure porteuse est supérieure à deux fois sa largeur.

Les génératrices des surfaces portantes des voilures longitudinales sont sensiblement rectilignes et sensiblement parallèles à l'axe de roulis du dispositif ou faiblement inclinées sur cet axe de roulis, ce qui est très différent d'une voilure classique d'aérodyne, qui s'étend perpendiculairement au sens de déplacement de l'aérodyne ou en position oblique, et présente donc une résistance à l'avancement peu compatible avec le vol de croisière, et nécessitant en général des moyens complexes, notamment des actionneurs, pour rétracter ces voilures ou, plus généralement, en modifier la configuration aérodynamique, pour le vol de croisière, ce qui impose de plus des limitations dans l'architecture desdites voilures. Dans la réalisation proposée par l'invention, le fait d'avoir les voilures sensiblement parallèles à l'axe de roulis, donc à la vitesse d'avance de l'appareil, en-dehors des phases d'atterrissage et de décollage, a pour conséquence que les voilures longitudinales de l'invention offrent une résistance minimale puisqu'elles sont attaquées par la tranche par le vent relatif en vol de croisière. Il n'est pas nécessaire de rétracter ces voilures longitudinales, et donc d'avoir des mécanismes complexes et pesants pour effectuer cette opération, et la voilure elle-même, qui n'a pas à être rétractée, peut aussi être conçue de façon plus efficace.

A cet effet, les voilures longitudinales sont avantageusement de type hyper-sustentateur, et comportent chacune au moins un élément de voilure présentant un profil avec une cambrure supérieure à 5% de la corde dudit profil.

De plus, les génératrices les plus extrêmes, de bord d'attaque et de bord de fuite, des voilures longitudinales peuvent former, avec l'axe de roulis, un angle inférieur à 5°, et la génératrice de bord de fuite converge vers celle du bord d'attaque du côté de l'avant de l'axe de roulis.

Les voilures longitudinales peuvent être liées à la structure porteuse de façon à ce qu'elles puissent prendre un angle quelconque entre -10° et +10° par rapport à un plan défini par deux des trois axes de roulis, tangage et lacet du dispositif.

De plus, les éléments de voilures longitudinales peuvent être reliés entre eux et à la structure porteuse par des éléments structurels présentant, en section, un profil aérodynamique, comme un profil d'aile, et agencés de préférence de sorte que les plans de symétrie médians de ces profils soient parallèles à l'axe de roulis du dispositif, ce qui permet d'offrir une faible résistance à l'avancement.

Pour orienter le flux d'air de soufflage des voilures à la demande, en fonction des exigences des conditions de vol, ledit flux d'air de soufflage des voilures est orienté, à la sortie de la structure porteuse dans une direction vers l'arrière ou l'avant du dispositif, et/ou dans une direction vers le haut ou le bas du dispositif, par deux systèmes de grilles à ailettes ou aubages pilotés.

En outre, le flux d'air de soufflage des voilures peut être dirigé vers le haut, à sa sortie de la structure porteuse, avec un angle de préférence supérieur à 10° par rapport à l'horizontale, de façon à ce que la résultante des forces de portance et de traînée exercées sur ladite voilure longitudinale soit sensiblement verticale.

Pour le soufflage des voilures, le flux d'air généré par la ou les soufflantes sort majoritairement sur les côtés longitudinaux de la structure porteuse par des ouïes de sortie latérale du flux d'air, qui sont, avantageusement, partagées en au moins trois, et de préférence quatre, catégories et pilotées indépendamment : des ouïes en vis-à-vis de la voilure pour assurer la portance du dispositif, des ouïes en vis-à-vis des extrémités de la voilure pour assurer la stabilité autour des axes de roulis et de tangage, des ouïes sans vis-à-vis pour assurer la stabilité en rotation autour de l'axe de lacet, et, éventuellement, des ouïes sur l'arrière pour la propulsion.

Afin de permettre d'orienter la portance des voilures longitudinales à la demande, en fonction des exigences des conditions de vol, les voilures longitudinales et au moins un élément structurel qui les relie à la structure porteuse forment un ensemble rigide pouvant être calé autour d'un axe d'articulation parallèle ou confondu avec l'axe de roulis et/ou d'un axe d'articulation parallèle ou confondu avec l'axe de tangage.

Le générateur de flux d'air peut avantageusement être alimenté par une ouverture d'aspiration, associée à un réseau d'aubages, et agencée et orientée de sorte à capter, en vol sensiblement horizontal, un flux d'air incident, qui est dévié par le réseau d'aubages et aspiré par ledit générateur, de préférence à au moins une soufflante radiale, puis soufflé transversalement sur les voilures longitudinales, après passage dans un circuit agencé dans la structure porteuse et ledit générateur, et dont les caractéristiques aérodynamiques permettent de conserver une grande part de l'enthalpie initiale du flux d'air incident, les aubages dudit réseau étant de préférence profilés et disposés de façon à générer une portance complémentaire à celle produite par lesdites voilures.

Avantageusement, le générateur de flux d'air comprend au moins deux soufflantes, dont les sens de rotation sont opposés de sorte à annuler le couple gyroscopique global des soufflantes.

Avantageusement de plus, la ou les soufflantes comporte(nt) elle(s)-même(s) une masse inertielle ou bien un volant d'inertie monté(e) sur le même axe que la soufflante correspondante, et proche d'elle, et entraîné(e)en rotation synchrone ou contrarotative.

Au moins une soufflante peut avantageusement être une soufflante radiale à pales inclinées vers l'arrière par rapport au sens de rotation de la soufflante.

Mais il est aussi possible d'utiliser une ou des soufflantes axiales, ainsi que d'associer au moins une soufflante axiale à au moins une soufflante radiale dans un dispositif à au moins deux soufflantes.

En outre ,la ou les soufflante(s) radiale(s) comporte(nt) avantageusement des pales qui peuvent pivoter chacune autour d'un axe sensiblement parallèle à l'axe de rotation de la soufflante correspondante, et dont l'orientation autour de l'axe de pivotement est commandée, lesdites pales de soufflante étant associées à un diffuseur fixe comportant des aubages, dont chacun est également pivotant autour d'un axe de pivotement parallèle à celui desdites pales de soufflante, et dont l'orientation est également commandée autour dudit axe de pivotement de façon à adapter les incidences des pales de soufflante et aubages de diffuseur à la puissance requise, et en particulier à réduire quasiment à 0 la puissance consommée par une soufflante, par pivotement desdites pales et desdits aubages de sorte à fermer les passages entre elles et entre eux, pour conserver une énergie de secours, en cas d'avarie, ou mettre en attente une soufflante pendant une phase de vol.

Avantageusement, le flux d'air généré par la ou les soufflantes pour souffler les voilures longitudinales est animé d'une vitesse comprise entre environ 15m/s et 100m/s, et de préférence entre environ 20m/s et 70m/s

Pour freiner la chute du dispositif, et donc de l'aérodyne qui en est équipé, en cas d'avarie moteur, avantageusement, la paroi inférieure délimitant des canaux d'alimentation en flux d'air de soufflage des voilures dans la structure porteuse comporte des trappes articulées s'ouvrant sous la pression d'un vent relatif vertical ascendant pour capter une partie dudit vent relatif et la convertir en une circulation d'air soufflant les voilures pour développer une portance limitant la vitesse de descente du dispositif et de l'aérodyne.

En variante, le dispositif peut comporter de plus au moins une soufflante axiale d'axe parallèle ou confondu avec l'axe de roulis et montée à l'avant de la structure porteuse, et dont le flux d'air axial de sortie est en partie capté dans l'entrée axiale de canaux ménagés dans la structure porteuse et courbés latéralement de sorte à déboucher latéralement par des ouïes de soufflage des voilures longitudinales, la partie du flux d'air axial de sortie de la ou des soufflantes axiales non captée par les canaux assurant la propulsion.

Enfin, dans un agencement et une disposition favorable de chaque voilure longitudinale par rapport à la structure porteuse en vis-à-vis, chacune des voilures longitudinales est agencée et disposée par rapport à la structure porteuse de sorte à vérifier la double condition

suivante : $0 \leq \dfrac{z0}{h} \leq 0,5$ et $0 \leq d \leq 10h$, où $h$ est la hauteur du flux d'air de soufflage d'une voilure et dévié vers le haut d'un certain angle, $h$ étant mesurée perpendiculairement à la direction du flux dévié, $d$ est la distance entre le bord d'attaque de la voilure et la section de sortie dudit flux d'air de la structure porteuse, cette distance étant mesurée parallèlement au flux dévié, et $z0$ est l'altitude du point extrême du bord d'attaque de la voilure dans le flux d'air dévié de hauteur $h$.

Avantageusement, afin d'assurer un bon compromis entre, d'une part, la nécessaire limitation de longueur, selon l'axe de roulis, des deux voilures longitudinales et de la structure porteuse, et, d'autre part, l'optimisation des pertes de charge dans les canaux latéraux d'alimentation en flux d'air des ouïes latérales de soufflage des voilures, la longueur de chaque voilure longitudinale est sensiblement égale, à + ou - 20% près, à $\dfrac{n}{2}$ fois la circonférence d'une soufflante, n étant le nombre de soufflantes, de sensiblement le même diamètre, du dispositif, en particulier dans le cas où le dispositif comprend une ou deux soufflantes.

L'invention a aussi pour objet un aérodyne à décollage et atterrissage vertical ou court, comprenant une structure porteuse supportant un dispositif de sustentation et propulsion caractérisé en ce que ledit dispositif est tel que présenté ci-dessus, et supporté en partie haute de ladite structure porteuse, laquelle est aménagée, en partie basse, en nacelle logeant notamment une motorisation et disposée entre les deux voilures sustentatrices longitudinales dudit dispositif.

L'avantage de ce positionnement de la nacelle, emportant la motorisation et la charge utile (passagers et/ou fret) sous le dispositif de sustentation et propulsion et entre les deux voilures longitudinales de ce dispositif, est une facilitation de la stabilisation de l'aérodyne par l'éloignement des zones de contrôle du flux d'air par rapport au centre de gravité, ce qui procure une stabilisation supérieure à celle d'une structure qui serait soutenue par des soufflantes axiales, et qui est toujours le point faible des aérodynes à décollage et atterrissage court autres que les hélicoptères.

L'invention sera mieux comprise, et d'autres caractéristiques et avantages de l'invention ressortiront plus clairement, à la lecture de la description, donnée ci-après à titre non limitatif, d'exemples de réalisation décrits en référence aux dessins annexés, sur lesquels :

- la figure 1 est une figure schématique rappelant les caractéristiques principales d'une aile unique fortement cambrée, donc à profil aérodynamique hyper-sustentateur, et des forces aérodynamiques qui s'exercent sur l'aile lorsque cette aile est soufflée par un vent relatif $\vec{V}$ ;

- les figures 1a et 1b représentent schématiquement un profil hyper-sustentateur et la force de trainée $\vec{Fd}$ qu'il génère selon qu'il est soumis à un vent relatif $\vec{V}$ dit de face (perpendiculaire aux génératrices longitudinales définissant le profil aérodynamique) ou de profil respectivement ;

- la figure 2 est une vue en coupe analogue à la figure 1 d'un exemple d'une voilure hyper-sustentatrice à plusieurs éléments, quatre dans cet exemple ;

- la figure 3 est une vue schématique, en partie en élévation latérale, au niveau de la structure porteuse et de la cellule de l'aérodyne, et en partie en coupe transversale, au niveau des voilures longitudinales, d'un exemple de réalisation de l'aérodyne selon l'invention,

- la figure 3a est une vue schématique en coupe transversale des éléments essentiels du dispositif de sustentation d'un aérodyne tel que celui de la figure 3 ;

- la figure 3b est une vue en plan d'un aérodyne tel que celui de la figure 3, équipé du dispositif de sustentation selon la figure 3a ;

- la figure 4 est une vue en coupe transversale analogue à la figure 3a d'un autre exemple de dispositif de sustentation selon l'invention, avec une soufflante radiale ;

- la figure 4a est une vue détaillée à plus grande échelle d'une partie de la figure 4, représentant les attaches de la voilure de gauche de la figure 4 sur la structure porteuse ;

- la figure 5 est une vue en plan d'un exemple d'aérodyne équipé du dispositif des figures 4 et 4a, et représentant la circulation de flux d'air générés par la soufflante radiale du dispositif de sustentation ;

- la figure 6 est une vue en coupe transversale partielle d'un autre exemple de dispositif de sustentation avec une soufflante centrifuge et des moyens de contrôle adaptés au dispositif de sustentation et à l'aérodyne selon l'invention ;

- les figures 6a, 6b et 6c sont des vues partielles en plan de pales de soufflante et d'aubes d'un distributeur associé à la soufflante, les pales et aubes étant orientables ;

- la figure 7 est une vue en coupe transversale partielle et analogue à celle de la figure 6 pour encore un autre exemple de dispositif de sustentation, avec une soufflante centrifuge et des moyens adaptés d'aspiration du flux d'entré d'air dans la soufflante, avec récupération de portance ;

- la figure 7a est une vue à plus grande échelle d'un détail de la figure 7 ;

- les figures 8a et 8b sont des vues schématiques en plan de la sortie d'un flux d'air sur une voilure longitudinale respectivement dans une configuration de décollage vertical, sur la figure 8a, et dans une configuration de vol de croisière avec une vitesse d'avance $\vec{V}cr,$ sur la figure 8b ;

- la figure 9 est une vue schématique en plan, analogue à celle de la figure 5, d'un dispositif de sustentation/propulsion et d'un aérodyne selon l'invention avec deux soufflantes contra-rotatives ;

- la figure 10 est une vue en coupe transversale partielle, analogue à celle de la figure 4a, d'un soufflage d'une voilure longitudinale à deux éléments avec un flux d'air légèrement orienté vers le haut, pour optimiser la force de portance sur cette voilure ;

- la figure 11 est une vue en coupe transversale partielle, analogue à celle de la figure 10 du dispositif de sustentation/propulsion aménagé pour une situation d'avarie du ou des moteur(s) d'entraînement de la ou des soufflante(s) et en descente rapide de l'aérodyne, avec ouverture d'une trappe de récupération et circulation du vent relatif vertical $\vec{V}z$ généré sur la voilure par la chute de l'aérodyne;

- les figures 12a et 12b sont des vues schématiques respectivement en plan et en élévation latérale par l'avant d'un autre exemple d'aérodyne selon l'invention, équipé de deux soufflantes axiales montées à l'avant de la structure porteuse, pour assurer la sustentation et la propulsion, et

- la figure 13 est une vue schématique en coupe transversale d'un agencement et d'une disposition aérodynamiquement très avantageuse d'une voilure longitudinale en vis-à-vis du bord correspondant de la structure porteuse.

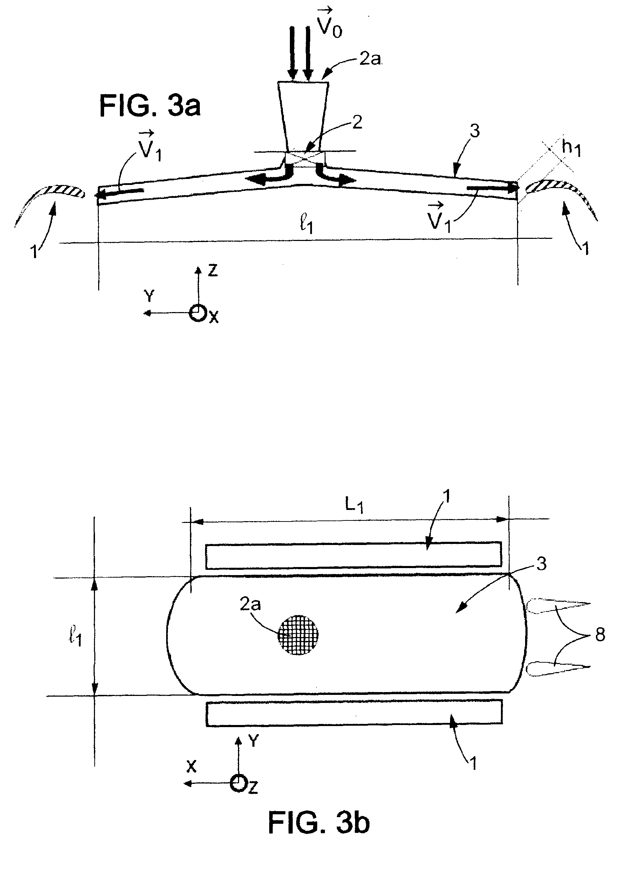

Dans toute la description qui suit, les mêmes références numériques ou alphanumériques sont utilisées pour désigner des éléments identiques ou analogues dans les différents exemples de réalisation représentés sur les figures, et, sauf dans la partie de la description en référence à la figure 3, le dispositif décrit est uniquement le dispositif de l'aérodyne qui assure la sustentation et la propulsion. On ne décrit pas de manière détaillée, en particulier ni la motorisation, ni la transmission de puissance de la motorisation à la ou aux soufflantes, ni la nacelle porteuse des passagers et/ou d'une cargaison, ces éléments étant agencés, de préférence, sous le dispositif de sustentation/propulsion de l'invention, comme décrit en référence à la figure 3.

Dans toutes les figures, l'axe X est l'axe de roulis, orienté vers l'avant de l'aérodyne, donc dans le sens de déplacement de l'aérodyne en vol horizontal, et, plus généralement, en dehors des phases de décollage et d'atterrissage vertical, l'axe X s'étend dans la direction longitudinale de l'aérodyne, tandis que l'axe Y est l'axe de tangage, qui est transversal par rapport à l'axe longitudinal et perpendiculaire à ce dernier, en étant lui-même généralement horizontal en configuration de vol stabilisé de l'aérodyne, et l'axe Z est l'axe de lacet, perpendiculaire au plan défini par les axes X et Y, et donc normalement vertical, en configuration de vol stabilisé de l'aérodyne.

La figure 1 représente une aile 1 soumise à un flux d'air de vitesse $\vec{V}$ orienté selon la flèche correspondante sur la figure 1, et les paramètres importants pour la mise en oeuvre de l'invention sont le profil aérodynamique de l'aile 1, l'incidence $\alpha1$ de l'aile 1 par rapport à la direction du vent relatif $\vec{V}$, la corde c de l'aile 1, qui est sa fibre neutre (fibre moyenne) allant de son bord d'attaque (le point le plus en avant de la section transversale correspondante dudit profil) à son bord de fuite (le point le plus en arrière de cette même section transversale) de l'aile 1, de sorte que la corde c représente la distance entre ces deux points les plus extrêmes du profil de l'aile, le « creux » ou la flèche f de l'aile 1, et la cambrure de l'aile 1, qui est le rapport $\dfrac{f}{c}$, et c qui s'exprime en pourcent de la corde c. Il en résulte des forces aérodynamiques, qui s'exercent sur l'aile 1, et dont la résultante, au centre de poussée de l'aile 1, est représentée par $\vec{F}$ et donnée par la formule suivante : $F = {}^1\!/_2 x Ro x V^2 x S,$ où $Ro$ est la masse spécifique de l'air, soit 1,225kg/m$^3$ en atmosphère standard à 20°C, $\vec{V}$ est, comme déjà dit, la vitesse du vent relatif auquel l'aile 1 est soumise, et S est la surface de l'aile, soit le produit $Lxc$ dans le cas d'une aile de corde constante c de longueur $L$. Cette résultante $\vec{F}$ des forces aérodynamiques s'exerçant sur l'aile 1 se décompose en une force de portance $\vec{Fl} = \vec{F}xKl,$ où $Kl$ est un coefficient de portance propre à l'aile 1, et dépendant des paramètres géométriques qui définissent cette aile 1, et en une force de traînée $\vec{Fd}$, tel que $\vec{Fd} = \vec{F}xKd$ où $Kd$ est un coefficient de traînée, également propre à l'aile 1, et dépendant de la géométrie de son profil.

On sait que la cambrure $\dfrac{f}{c}$ d'une aile ainsi que l'incidence $\alpha\mathbf{1}$ par rapport au vent relatif $\vec{V}$ peuvent être augmentées dans certaines limites pour augmenter très significativement la valeur du coefficient de portance **Kl**. On peut ainsi créer un profil dit hyper-sustentateur, dont l'inconvénient est qu'il présente également un coefficient de traînée **Kd** augmenté. Or, une telle augmentation du coefficient de traînée **Kd** est incompatible avec le vol de croisière d'un aérodyne, pour lequel la motorisation et la consommation de carburant sont alors excessives.

L'aile 1 représentée schématiquement sur la figure 1 est une aile fortement cambrée ($\dfrac{f}{c} > 5\%$), qui est de type hypersustentateur, c'est-à-dire présente un coefficient de portance **Kl>1** pour une incidence $\alpha\mathbf{1}$ > 10°. Les figures 1a et 1b représentent schématiquement ce profil hyper-sustentateur et la force de traînée $\vec{Fd}$ selon que ce profil est soumis à un vent relatif $\vec{V}$ orienté « de face » (dans le plan du profil aérodynamique de l'aile 1) ou de profil (longitudinalement, selon l'envergure de l'aile 1), et ces deux figures 1a et 1b montrent qu'une voilure à forte portance, orientée transversalement au vent $\vec{V}$, exerce une force de traînée $\vec{Fd}$ très supérieure, dans un facteur très important (supérieur à 10) à la force de traînée $\vec{Fd}$ de la même voilure soumise au même vent $\vec{V}$ mais longitudinalement, parallèlement à la longueur de l'aile 1, selon la figure 1b.

La figure 2 représente un exemple de voilure hyper-sustentatrice 1, qui est un agencement de quatre éléments de voilure 1a à 1d en succession du bord d'attaque au bord de fuite de la voilure 1, et dont certains éléments de voilure ont une forte cambrure, une forte incidence par rapport au flux d'air du vent relatif $\vec{V}$, des fentes 1e, 1f, 1g de circulation d'air séparant deux éléments de voilure voisins, pour limiter les phénomènes de décollement de l'air sur l'extrados de la voilure 1, qui est en dépression, par prélèvement d'air sur l'intrados de la voilure 1, qui est en surpression.

Ainsi, la voilure 1 de la figure 2 comporte un premier élément de voilure 1a, agencé en bec de bord d'attaque séparé par une fente 1e d'un deuxième élément de voilure 1b, qui est une aile à profil assez standard, avec une légère cambrure (4% par exemple), et un angle d'incidence par rapport au flux d'air $\vec{V}$ limité à 9°, pour éviter les risques de décrochement. Ce second élément de voilure 1b est suivi par un troisième élément de voilure 1c, dont il est séparé par une fente 1f, et qui est une aile sensiblement plus cambrée (de 15% à 25%), ce troisième élément de voilure 1c étant lui-même suivi du quatrième élément de voilure 1d, sous forme d'une aile de bord de fuite de faibles cambrure et corde mais grande incidence, dont le troisième élément de voilure 1c est séparé par une fente 1g. L'incidence moyenne $\alpha$1 de la voilure est de préférence supérieure à 20°. On obtient ainsi une voilure 1 très efficace sur le plan de la portance, et aussi très robuste sur le plan de l'évolution de portance, quand l'aérodyne est en mouvement, comme précisé ci-après.

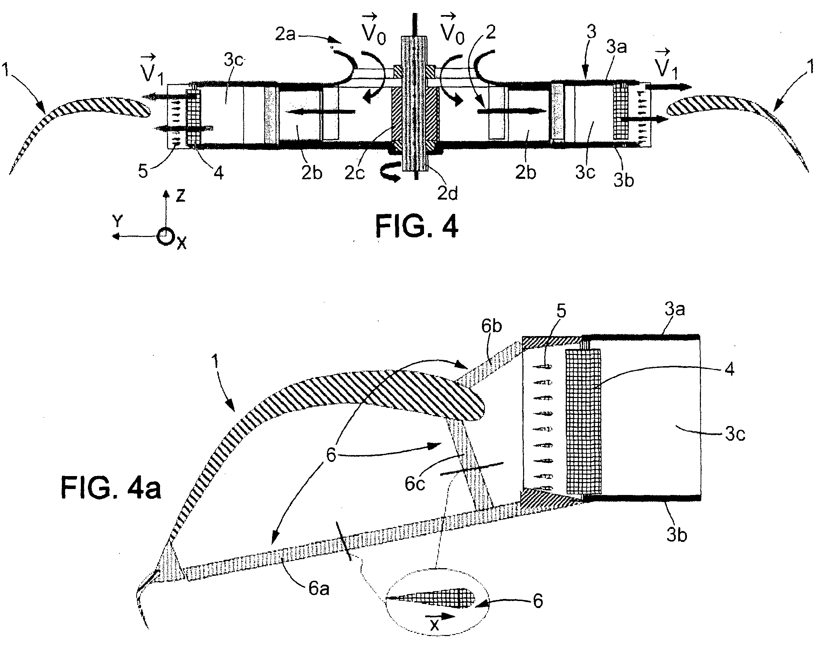

La figure 3 représente schématiquement un exemple d'aérodyne selon l'invention, comprenant une structure porteuse 3 supportant, en partie haute, un dispositif de sustentation et propulsion, et aménagée, en partie basse, en nacelle 31. Le dispositif de sustentation et propulsion comporte essentiellement un générateur de flux d'air 2, et deux voilures sustentatrices 1, disposées de part et d'autre de la structure 3, reliées, de manière non représentée sur la figure 3 mais visible sur les figures 4a, 5 et 9 comme décrit ci-après, à la structure porteuse 3, et chacune soufflée latéralement par un flux d'air de sortie du générateur 2, alimenté en air ambiant par au moins une ouverture d'entrée ou d'aspiration d'air 2a ménagée dans la partie supérieure de la structure 3. Les voilures 1 ont des profils aérodynamiques et des surfaces portantes défini(e)s par des génératrices sensiblement rectilignes, et s'étendant sensiblement dans la direction longitudinale de l'aérodyne, donc de sa structure porteuse 3, c'est-à-dire sensiblement selon l'axe de roulis X, en étant disposées symétriquement par rapport au plan défini par les axes de roulis X et de lacet Z, latéralement de part et d'autre de la structure porteuse 3. De même, les deux voilures 1, dans cet exemple formées chacune d'une aile hyper-sustentatrice d'une seule pièce non rétractable et d'une épaisseur e pouvant être relativement faible, sont soufflées symétriquement par rapport audit plan des axes de roulis X et de lacet Z par le flux de sortie du générateur 2.

De la sorte, les deux voilures 1 développent des forces de traînées $\vec{F_d}$ de même amplitude mais de sens opposés, donc qui s'annulent, et des forces de portance $\vec{Fl}$ qui s'additionnent pour assurer la sustentation de l'aérodyne.

Le générateur de flux d'air 2 est réalisé sous la forme d'un compresseur d'air constitué, par exemple, d'au moins une soufflante centrifuge ou axiale, pouvant être à hélice carénée ou à rotor multipale caréné, intégrée dans la structure porteuse 3, et entraînée en rotation par une transmission de puissance (non représentée) à partir d'un moteur 21, monté dans la nacelle 31, par exemple un moteur à combustion interne alimenté en carburant à partir d'un réservoir (non représenté) également monté dans la nacelle 31, qui loge de plus un poste de pilotage, pour un contrôle télécommandé et/ou piloté de l'aérodyne, ainsi qu'une cabine et/ou une soute pour le transport respectivement de passagers et/ou d'une cargaison.

Il est à noter qu'un tel aérodyne est avantageusement et principalement destiné à déplacer verticalement et transporter sensiblement horizontalement des charges lourdes, de préférence dans des conditions météorologiques favorables, avec peu de vent, conditions dans lesquelles cet aérodyne est principalement en concurrence avec les moyens de levage des « plus légers que l'air », tels les ballons dirigeables.

Pour compléter la description de l'aérodyne de la figure 3, ce dernier est également équipé d'une dérive 8, en saillie au-dessus de la structure porteuse 3 et fixé (de manière non représentée) à la partie arrière de cette dernière, et dont une partie pivotante autour d'un axe parallèle à l'axe de lacet Z est orientable pour faire office de gouverne de direction.

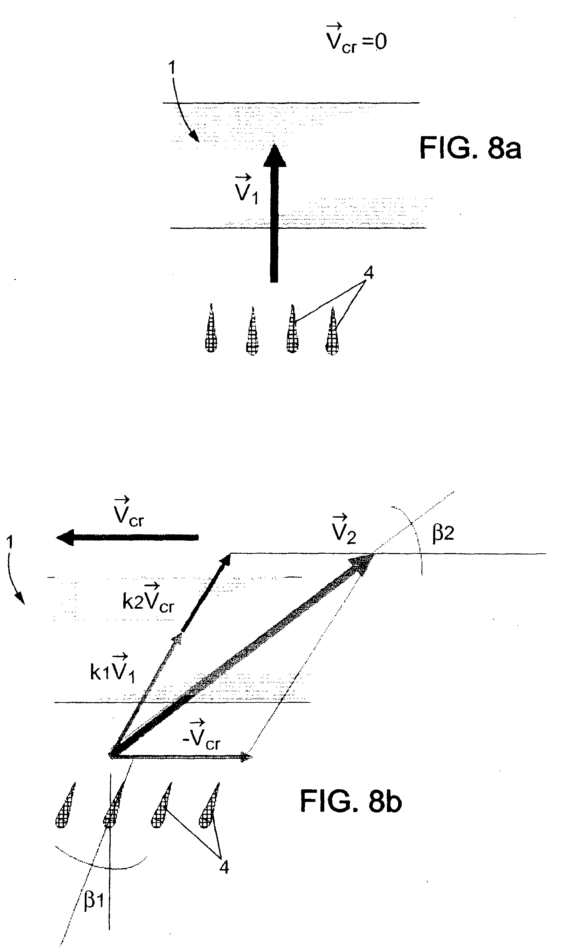

Les figures 3a et 3b représentent schématiquement, respectivement en coupe transversale et en plan, la structure générale d'un dispositif de sustentation/propulsion selon l'invention, avec un générateur de flux d'air 2 sous la forme d'un compresseur axial-centrifuge, qui aspire l'air à une vitesse $\vec{Vo}$ par une ouverture d'aspiration 2a et qui repartit ce flux d'air accéléré dans des canaux de guidage de la structure porteuse 3 de l'ensemble. Ces canaux guident ce flux d'air majoritairement sur les deux voilures 1 de sustentation, rectilignes et disposées longitudinalement, sensiblement parallèlement à l'axe de roulis X, qui correspond à la direction de déplacement de l'aérodyne en vol de croisière, ces voilures 1 étant symétriques de part et d'autre de la structure porteuse 3 par rapport au plan des axes de roulis X et de lacet Z, et étant de préférence, mais non exclusivement, des voilures hyper-sustentatrices. Les flux d'air de soufflage des voilures longitudinales 1 sortent, dans des sens opposés, par des ouïes latérales de hauteur h1 à une vitesse V1, proche de la vitesse de l'air en sortie de la soufflante 2, et les ouïes sont distribuées sur le pourtour de la structure porteuse 3 de sorte qu'une majorité d'entre elles, représentant plus de 50% de la longueur des ouïes, est distribuée sur les deux côtés longitudinaux , de longueur **L1** (voir figure 3b) de la structure porteuse 3, les ouïes latérales, visibles sur la figure 3a, étant de préférence également symétriques par rapport au plan des axes de roulis X et de lacet Z sur les grands côtés opposés de la structure porteuse 3, dont la longueur **L1** selon l'axe de roulis X est au moins deux fois supérieure à la largeur *l*1 (voir figure 3b), ce qui permet d'optimiser cette conception de l'aérodyne, par le choix d'une architecture qui maximise la longueur des ouïes latérales dédiées au soufflage des deux voilures longitudinales 1, dont la forme et la disposition sensiblement rectiligne parallèle à l'axe de roulis X, ou axe longitudinal de la structure 3, permet, d'une part, d'avoir une forte portance, et, d'autre part, d'avoir un bras de levier plus grand pour des ouïes latérales qui servent à équilibrer l'assiette de l'aérodyne, comme plus précisément décrit ci-après. Un avantage essentiel de la configuration proposée par l'invention est que, en plus de l'absence de force de traînée significative sur les voilures 1 en mouvement avec la structure porteuse 3 de l'aérodyne, la transition entre le vol vertical, avec une composante principale selon l'axe de lacet Z, et le vol horizontal, avec une composante principale selon l'axe de roulis X, se fait très naturellement, puisque la même configuration est conservée dans les deux situations, comme cela est encore expliqué en détail ci-après, en référence aux figures 8a et 8b.

Sur les figures 3a et 3b, comme sur la figure 3 précédemment décrite, les attaches des deux voilures longitudinales 1 à la structure porteuse 3 ne sont pas représentées, et le bord arrière, légèrement convexe vers l'arrière, de la structure porteuse 3 est équipé de deux dérives 8 verticales, parallèles et orientables, au moins en partie, autour d'un axe parallèle à l'axe de lacet Z, pour stabiliser l'aérodyne en vol d'avancement et faire office de gouvernail de direction. On constate également que chacune des voilures longitudinales 1 s'étend sensiblement sur toute la longueur du grand côté correspondant de la structure 3.

Une variante de réalisation du dispositif de sustentation et propulsion est représentée en coupe transversale sur la figure 4, au niveau d'une soufflante centrifuge radiale 2 centrée sur l'axe de roulis X et constituant le générateur de flux d'air, et sur la figure 4a représentant une coupe transversale partielle de ce dispositif au niveau d'une attache de l'une des deux voilures longitudinales 1 au bord latéral correspondant de la structure porteuse 3.

Pour réaliser le générateur de flux d'air, l'utilisation d'une soufflante radiale à rotor multipale comportant des pales 2b inclinées sur l'arrière (par rapport au sens de rotation du rotor) est le mode de réalisation préféré, en cas de soufflante unique, et au moins pour réaliser la soufflante avant, en cas de pluralité de soufflantes constituant le générateur de flux d'air et réparties sur la longueur de la structure porteuse 3. Une telle soufflante radiale présente, en effet, l'avantage de s'intégrer très avantageusement dans la structure porteuse 3, avec un bon compromis sur les plans du rendement et du débit. Sur la figure 4, l'air aspiré par une ouverture d'entrée 2a à profil adapté en volute, est accéléré au passage entre les pales 2b du rotor de la soufflante 2, dont le moyeu 2c est entraîné en rotation par un arbre rotor 2d. Cet air accéléré est ensuite conduit dans des canaux 3c de la structure porteuse 3, qui sont délimités entre des parois supérieure 3a et inférieure 3b de cette structure porteuse 3. Le flux d'air en sortie de la soufflante 2 débouche ensuite majoritairement sur les deux grands côtés opposés de cette structure 3, à travers des ouïes latérales rectangulaires de hauteur constante h1 et formées par deux grilles d'aubages 4 et 5, constituées d'aubages aérodynamiquement profilés et articulés, et pilotés en fonction des configurations de vol, pour, selon les besoins, orienter localement le flux d'air traversant ces grilles d'aubages 4 et 5 vers le haut ou le bas, pour ce qui concerne les aubages 5, et/ou vers l'avant ou l'arrière de l'aérodyne (par rapport à son axe de roulis X) pour les aubages 4 situés en amont des aubages 5. Les flux d'air de sens opposés sortant latéralement sur les deux grands côtés de la structure porteuse 3 sont ainsi soufflés chacun sur l'une respectivement des deux voilures longitudinales 1, qui sont chacune attachée à la structure porteuse 3 par des montants 6, représentés sur la figure 4a, et répartis le long de chaque grand côté correspondant. Ces montants 6, dont une particularité est d'offrir un profil aérodynamique dans le sens de l'axe de roulis X, représenté en coupe sur le détail cerclé de la figure 4a, comprennent un bras latéral inférieur 6a reliant le bord de fuite d'une voilure 1 correspondante au bord latéral de la paroi inférieure 3b de la structure 3, un bras latéral supérieur 6b reliant l'extrados du bord d'attaque de cette voilure 1 au bord latéral de la paroi supérieure 3a de la structure 3, à l'aplomb du bras inférieur 6a correspondant et de son rattachement à la paroi inférieure 3b, ainsi qu'un hauban 6c raidissant la liaison en rattachant l'intrados du bord d'attaque de cette voilure 1 au bras latéral inférieur 6a, à proximité de son rattachement à la paroi inférieure 3b.

D'autres agencements de montants et bras de rattachement des voilures 1 à la structure porteuse 3 sont bien entendu possibles, mais celui proposé sur la figure 4a procure une bonne rigidité, tout en étant d'une structure simple, légère et économique.

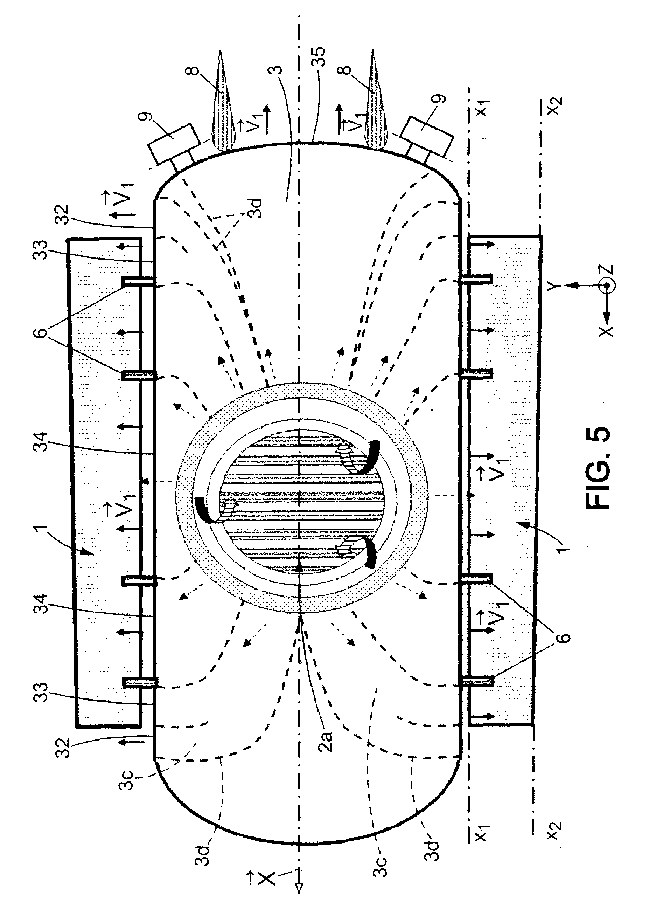

La figure 5 est une vue d'ensemble de dessus du dispositif de l'invention selon les figures 4 et 4a, et sur laquelle, de part et d'autre de la structure porteuse 3, les deux voilures 1 sont disposées longitudinalement, sensiblement parallèles à l'axe de roulis X, ces voilures 1 étant montées symétriquement par rapport au plan des axes de roulis (X) et lacet (Z) en étant reliées aux grands côtés de la structure 3 par des montants 6 espacés selon l'axe de roulis X, qui est l'axe de déplacement de l'aérodyne en vol de croisière. Les génératrices formant les surfaces portantes des voilures longitudinales 1 sont sensiblement rectilignes, et s'étendent sensiblement parallèlement à l'axe de roulis X, qui est l'axe longitudinal médian ou central du dispositif, et, éventuellement, également de l'aérodyne. Ces génératrices peuvent aussi avantageusement présenter une très légère conicité, avec la pointe du cône dirigée vers l'avant du dispositif (vers la gauche sur la figure 5), de sorte que chacune des deux voilures 1 présente, en plan, la forme d'un trapèze rectangle dont les deux bases s'étendent selon l'axe de tangage Y, la petite base étant tournée vers l'avant, et sont très inférieures à la hauteur du trapèze rectangle qui s'étend selon l'axe de roulis X sur pratiquement toute la longueur du grand côté correspondant de la structure 3, et de façon à ce que le vent relatif incident sur les voilures 1, lorsque l'aérodyne est en vol de croisière sensiblement horizontal selon l'axe de roulis X, est dirigé sur l'extrados des voilures 1, avec pour effet de rabattre les filets d'air vers la voilure 1, en évitant leur décollement. Les génératrices $x1x1$ et $x2x2$, respectivement au niveau du bord d'attaque et du bord de fuite de chacune des voilures latérales soufflées 1, montrent un tel agencement de conicité, sur la voilure 1 inférieure sur la figure 5, avec une exagération de l'angle d'inclinaison de la génératrice $x2 x2$ de bord de fuite sur la génératrice $x1x1$ de bord d'attaque, pour plus de clarté, cet angle étant inférieur ou égal à 5°.

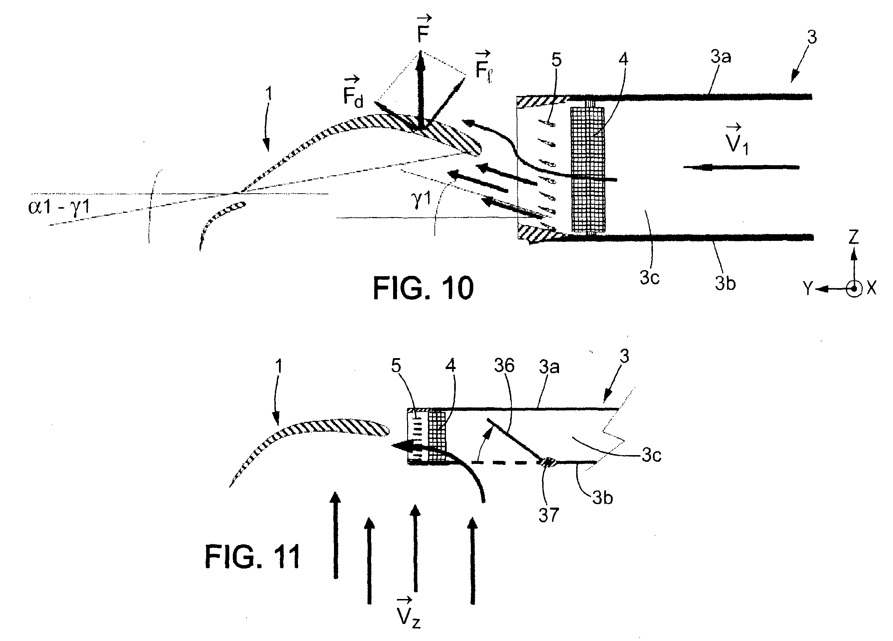

Avantageusement de plus, chaque voilure 1 peut être montée dans un berceau latéral relié à la structure porteuse 3 avec une mobilité limitée en pivotement autour de l'axe de tangage Y ou d'un axe parallèle à ce dernier, comme décrit ci-après en référence à la figure 10, de sorte que l'ensemble de la voilure 1 peut légèrement tourner autour de l'axe de tangage Y d'un angle inférieur à $\pm 10°$, pour adapter l'incidence de la voilure 1 à des conditions de vol particulières.

Dans le dispositif de la figure 5, comme déjà décrit en référence à la figure 4, l'air est aspiré par l'ouverture 2a ménagée dans la partie supérieure de la structure porteuse 3, puis accéléré par la soufflante 2, de type radial, et enfin, à travers des canaux 3c délimités par des cloisons 3d (entre les parois supérieure 3a et inférieure 3b des figures 4 et 4a) de la structure porteuse 3, est dirigé en périphérie de la structure 3 et en différents endroits, qui vont de l'avant à l'arrière de l'aérodyne. La section des canaux 3c est avantageusement convergente, c'est-à-dire que la section individuelle d'un secteur d'ouïes de sortie du flux d'air vers l'extérieur de la structure 3, et en particulier vers les voilures 1, est avantageusement légèrement plus faible (de quelques pourcents) que la section de sortie de la soufflante 2 dont le canal 3c correspondant est issu. Les ouïes de sortie du flux d'air sont ainsi distribuées tout autour de la structure porteuse 3, de la façon suivante :

- des ouïes 32 dites libres, car sans portion de voilure longitudinale 1 en vis-à-vis, et qui débouchent donc latéralement de la structure 3 au-delà des extrémités avant et arrière (selon l'axe de roulis X) de chacune des deux voilures 1, pour stabiliser l'aérodyne, en particulier en rotation autour de l'axe de lacet Z ;

- des ouïes 33, adjacentes aux ouïes 32, et donc en vis-à-vis d'une portion d'extrémité longitudinale de voilure 1, et qui servent aussi à stabiliser l'aérodyne, mais en rotation autour des axes de roulis X et/ou de tangage Y ;

- des ouïes 34, entre les ouïes 33 sur chaque grand côté de la structure 3, donc en vis-à-vis de la majeure partie des voilures 1, et qui ont pour fonction d'assurer l'essentiel de la sustentation ; et

- des ouïes 35, débouchant à l'arrière de la structure 3, et qui servent à délivrer une poussée propulsive à l'aérodyne en vol de croisière, et en appoint à la sustentation dans une phase de montée ou descente (verticale) de l'aérodyne, en dirigeant au moins une partie du flux d'air sortant de ces ouïes 35 vers le bas, par exemple à l'aide de volets hyper-sustentateurs 9, montés pivotants autour d'axes transversaux dans un plan parallèle aux axes de roulis X et de tangage Y, et pouvant être parallèles à l'axe Y, et orientables par des actionneurs autour de ces axes pour non seulement pouvoir aider au décollage, mais aussi être utilisables en élevons, pour remplir la fonction d'ailerons classiques, en virage de l'aérodyne, et de sorte que ces surfaces de commande 9 puissent également être utilisées, en combinaison avec la ou les dérives 8, pour stabiliser l'aérodyne et le diriger en vol, en opérant comme des gouvernes de profondeur.

Les ouïes 33 et 34 de soufflage des voilures 1 représentent plus de 50% de la longueur totale des ouïes sur le pourtour de la structure porteuse 3.

La ou les dérives 8 peut ou peuvent aussi être utilisée(s) en vol stationnaire pour lutter contre le couple gyroscopique du moteur, dans le cas d'un générateur de flux d'air constitué d'une unique soufflante, en produisant des moments qui s'ajoutent à ceux générés par les ouïes « libres » 32 du dispositif. Juste avant la sortie par les ouïes, le flux d'air peut être orienté vers l'avant ou l'arrière de l'aérodyne, et/ou vers le haut ou le bas de la structure 3 par deux systèmes de grilles à aubages telles que les grilles 4 et 5 des figures 4 et 4a ; ces grilles sont sectorisées, et, au minimum, chaque secteur de grille correspond à une catégorie respective des ouïes identifiées ci-dessus. Les grilles de ces secteurs sont motorisées par des actionneurs individuels, de façon à pouvoir être pilotées indépendamment les unes des autres, et obtenir les effets voulus sur le comportement de l'aérodyne. De plus, en amont de ces grilles d'aubages telles que 4 et 5, certains des canaux 3c d'alimentation en flux d'air peuvent comporter des vannes (non représentées), par exemple du genre vanne papillon, de façon à pouvoir interrompre ou, à tout le moins, moduler l'alimentation en air d'un secteur particulier de la périphérie de la surface porteuse 3, et de redistribuer l'alimentation en air sur d'autres secteurs.

En outre, si nécessaire, l'aérodyne peut également comporter des moyens de propulsion distincts des ouïes arrières 35, comme, par exemple une hélice propulsive.

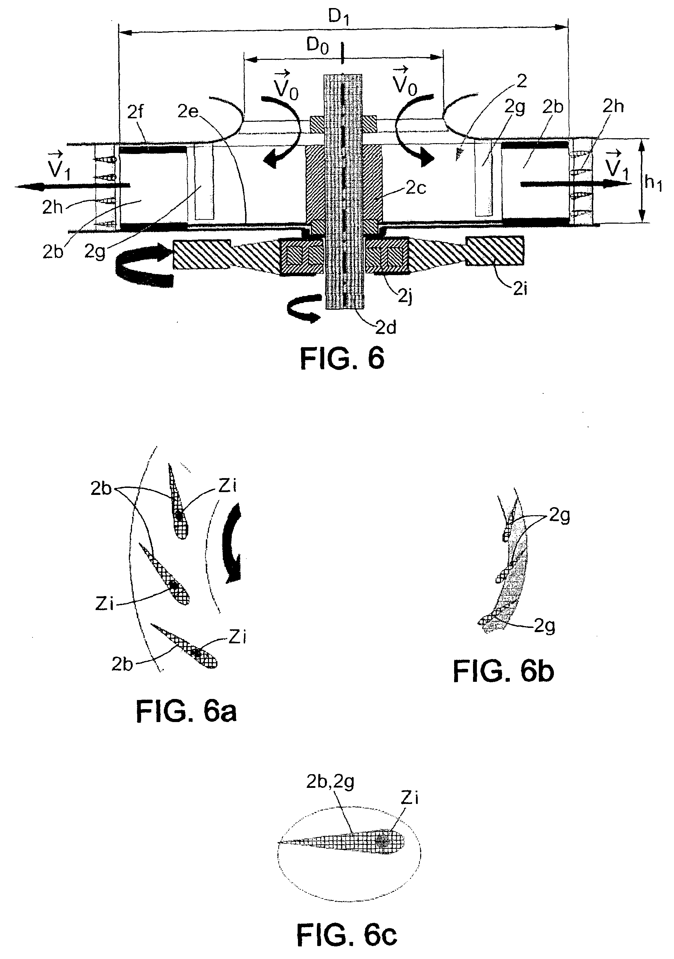

La figure 6 représente, en coupe transversale partielle, une autre variante de dispositif de sustentation dont la soufflante centrifuge est bien adaptée au dispositif.

De façon générale, la génération du flux d'air peut se faire à partir de soufflantes axiales ou centrifuges (radiales), ou à partir d'hélices contra-rotatives carénées, pour éliminer le couple gyroscopique.

Dans la variante de la figure 6, le générateur de flux d'air 2 est une soufflante centrifuge à pales 2b inclinées sur l'arrière, car, comme déjà mentionné ci-dessus en référence à la figure 4, une telle soufflante centrifuge est bien adaptée à générer de la portance en soufflant les voilures latérales 1, selon l'invention. Mais en outre, pour adapter avantageusement cette soufflante 2 à son usage dans le cadre de l'invention, cette soufflante 2 présente les spécificités suivantes :

- un plateau 2e, entraîné en rotation par l'arbre moteur 2d, et qui entraîne avec lui un ensemble de pales propulsives 2b sur le plateau 2e et contreventées par une couronne supérieure 2f ;

- des aubages 2g, fixes en rotation, d'un diffuseur statorique annulaire monté immédiatement en amont (par rapport au sens découlement de l'air) des pales rotatives 2b ;

- une grille d'aubages redresseurs 2h en sortie de la soufflante 2 ; et

- avantageusement, de plus, un volant d'inertie 2i, monté autour de l'arbre moteur 2d sous le plateau 2e, et entraîné en rotation par l'arbre 2d par l'intermédiaire d'une boîte de vitesse 2j.

Le diamètre externe D1 du plateau 2e, très supérieur au diamètre Do de l'entrée d'air, est au moins égal à 50% de la largeur (*l*1 sur la figure 3b) de la structure porteuse 3, pour utiliser au mieux l'espace disponible, et générer un flux d'air à gros débit et basse vitesse. A cet effet, la vitesse $\vec{V1}$ de sortie du flux d'air de l'unique soufflante 2 ou, lorsque plusieurs soufflantes sont prévues, des soufflantes qui alimentent les ouïes 33 et 34 en vis-à-vis des voilures 1, est choisie relativement basse, entre 25m/s et 100m/s. Les pales 2b de la soufflante 2 sont inclinées sur l'arrière par rapport au sens de rotation du rotor à pales de cette soufflante 2, et ces pales 2b peuvent pivoter chacune autour d'un axe Zi (voir figures 6a et 6c) qui est parallèle à l'axe de lacet Z. Le pivotement des pales 2b est piloté par des actionneurs, de même que le pivotement des aubages 2g du diffuseur placé en amont du rotor de soufflante 2, et dont les aubages 2g sont également chacun articulé (voir figure 6c) autour d'un axe Zi parallèle à l'axe de lacet Z (les actionneurs n'étant pas représentés sur la figure 6 dans un souci de clarté et de simplification). Les figures 6a et 6b représentent respectivement et partiellement le rotor à pales 2b de la soufflante 2 et le diffuseur statorique à aubages 2g immédiatement en amont de ce rotor.

De cette façon,, la soufflante 2 est entraînée avec une vitesse de rotation fixe, et la mise en pré-rotation du flux d'air par les aubages 2g du diffuseur, puis l'accélération définitive du flux par les pales 2b de la soufflante 2 se font en calant les angles de pivotement des aubages 2g de diffuseur et des pales 2b à des valeurs appropriées prédéterminées.

On peut ainsi moduler à tout moment la « charge » motrice, la puissance délivrée et, par conséquence, la force sustentatrice exercée par les voilures 1.

Un autre avantage de cette configuration est qu'en cas d'avarie, une panne de moteur par exemple, la soufflante 2 peut être mise en sécurité, en fermant à la fois les passages entre les aubages 2g du diffuseur par la commande appropriée de l'inclinaison de ces aubages 2g, et en fermant également les passages entre les pales 2b de la soufflante 2, par une commande appropriée de l'inclinaison de ces pales. Le débit est alors nul, et aucune puissance n'est absorbée par la soufflante 2. Cette dernière continue de tourner, par l'effet de l'énergie cinétique emmagasinée dans son rotor, et augmentée avantageusement par l'énergie cinétique du volant d'inertie 2i entraîné en rotation en même temps que le rotor de la soufflante 2.

En restant dans la configuration d'une panne de moteur, qui entraîne une perte de portance des voilures 1, puis la fermeture des passages entre les aubages 2g et entre les pales 2b, de sorte que l'aérodyne perd de l'altitude, les pales 2b et aubages 2g peuvent être réactivé(e)s, c'est-à-dire commandé(e)s en rotation pour ouvrir à nouveau le passage d'air entre les aubages 2g et entre les pales 2b, lorsque l'aérodyne est suffisamment près du sol, à une altitude de l'ordre de 20 à 50m par exemple. L'énergie cinétique emmagasinée dans le rotor à pales 2b de la soufflante 2 comme dans le volant d'inertie 2i est alors restituée, pour développer un flux d'air de soufflage des voilures 1, et donc développer une portance, qui ralentit efficacement la chute de l'aérodyne. Il est à noter que le volant d'inertie 2i est avantageusement entraîné en rotation dans le sens opposé à celui du rotor de la soufflante 2, de façon à annuler, au moins partiellement, le moment résistant en rotation autour de l'axe de roulis X et lié au couple gyroscopique, si nécessaire.

D'autre part, la vitesse périphérique de la soufflante 2 est choisie de préférence très élevée, de l'ordre de 200m/s par exemple. Donc il peut suffire d'intégrer une masse supplémentaire à la structure périphérique du plateau ou rotor de la soufflante 2 pour générer une inertie conséquente (volant d'inertie « intégré » dans le rotor de soufflante). Le volant d'inertie 2, séparé, quant à lui, a deux fonctions : l'une est d'accroître encore l'inertie cinétique stockée, l'autre -dans le cas d'un volant 2i contrarotatif par rapport à la soufflante 2- est de réduire, voire d'annuler le moment résistant en rotation autour de l'axe de roulis X lié au couple gyroscopique. En effet, il peut être intéressant de conserver une partie de ce couple gyroscopique pour accroître la stabilité de vol notamment en roulis.

La figure 7 représente une soufflante radiale 2 du type précédent décrit en référence à la figure 6 et une structure d'aspiration de l'air qui la surmonte. Cette structure d'aspiration est inclinée de haut en bas et de l'arrière vers l'avant de la structure porteuse 3, pour être dirigée dans le sens du déplacement de l'aérodyne, et comporte un réseau d'aubages 10 en appui sur le pourtour de l'ouverture d'aspiration 2a, ménagée dans la paroi supérieure du carter de la soufflante 2. Ce réseau d'aubages 10 offre le double avantage d'orienter vers le bas le flux d'air horizontal du vent relatif découlant de la vitesse d'avance de l'aérodyne $\vec{Vcr}$, ce qui est favorable à l'aspiration de la soufflante 2, et, au passage de ce flux d'air sur les aubages directeurs (...,10i, 10(i+1), ...) de ce réseau, de contribuer à la portance de l'aérodyne en exerçant, comme représenté sur le détail de la figure 7a, une somme de forces verticales (..., fl(i), fl(i+1), ...) qui, au total et dans l'exemple précité, peuvent représenter l'équivalent du poids du moteur d'entraînement de la soufflante 2.

En effet, chaque aubage 10 du réseau ou de la grille d'aubages sur l'ouverture d'aspiration 2a du flux d'air est configuré comme un profil d'aile à forte cambrure (supérieure à 5%), de façon à générer une portance par la circulation du flux d'air autour de ces profils.

Les figures 8a et 8b sont particulièrement importantes, car elles montrent, vu de dessus, le fonctionnement de la transition entre le vol vertical et le vol horizontal. Sur ces figures, le flux d'air soufflé vers une voilure longitudinale 1 avec une vitesse $\vec{V1}$, franchit, au niveau des ouïes latérales telles que 33 et 34 de la figure 5, la grille d'aubages 4 (voir figure 4) d'orientation du flux, qui sert à orienter le flux d'air vers l'avant où vers l'arrière de l'aérodyne, puis circule transversalement au-dessus et au-dessous du profil des voilures 1, orientées sensiblement parallèlement à l'axe de roulis X. La figure 8a montre la situation en phase de décollage ou d'atterrissage vertical. Dans ce cas, la vitesse de croisière $\vec{Vcr}$ est nulle, les aubages 4 sont parallèles à l'axe de tangage Y, et la vitesse $\vec{V1}$ de sortie de l'air est perpendiculaire à la voilure 1 et à l'axe de roulis X. La figure 8b montre la même situation en vol horizontal de l'aérodyne à la vitesse non nulle $\vec{Vcr}$, et en conservant toute la puissance motrice. Les aubages 4 sont inclinés vers l'arrière de l'aérodyne d'un angle β1. La vitesse $\vec{V2}$ du flux d'air à laquelle la voilure 1 est soumise est alors la résultante d'une somme de deux vecteurs :

1. l'un parallèle à l'axe de déplacement ou axe de roulis X, est égal à $\vec{-Vcr}$,

2. l'autre, orienté transversalement selon une direction qui fait l'angle β1 avec l'axe de tangage Y, est égal à la somme :

a. de la vitesse $(k1\vec{V1})$, où $\vec{V1}$ est la vitesse précédente et $k1$ est un coefficient qui résulte du travail du moteur ; $k1$ vaut 1 si l'on conserve la même puissance motrice que dans la situation de décollage vertical, et 0 si l'on introduit aucune puissance motrice dans la soufflante 2 ;

b. et d'un vecteur $(k2\vec{Vcr})$, où $k2$ est un coefficient sensiblement compris entre 0,7 et 1, qui tient compte principalement des pertes de charge dans la circulation du flux à travers les aubages 10 d'entrée de la structure d'aspiration de la figure 7, et/ou le diffuseur à aubages 2g de la figure 6, la soufflante 2 et les canaux 3c. En effet, l'air incident qui est capté, le cas échéant, au niveau de la grille d'aubages 10 de la figure 7, conserve la majeure partie de son énergie (enthalpie) pendant la traversée des aubages 10 et/ou 2g, s'ils sont présents, des pales 2b de la soufflante 2 et des canaux 3c, si cet ensemble est bien conçu sur le plan aérodynamique, et donc cet air incident ressort par les ouïes telles que 33 et 34 de la figure 5, avec la même vitesse

$\vec{Vcr}$ que sa vitesse d'entrée, affectée d'un coefficient **k2** de rendement lié aux pertes de charge.

L'angle β1 est un angle choisi par le système de commande de vol, qui gère la transition entre le vol vertical et le vol horizontal. Dans cette condition d'exploitation, trois observations s'imposent.

1. La vitesse $\vec{V2}$ vue par la voilure 1 dépend de l'angle β**1**, mais est de toute façon sensiblement plus grande que $\vec{V1}$, notamment quand $\vec{Vcr}$ est de l'ordre de grandeur de $\vec{V1}$, voire plus grand.

2. La direction oblique d'un angle β**2** de la résultante $\vec{V2}$, par rapport à l'axe de roulis fait que le coefficient **KI** du profil de la voilure 1, vu sous cet angle β**2**, est sensiblement plus faible (par exemple la moitié) de ce qu'il est en configuration de décollage ou d'atterrissage vertical (avec $\vec{V2}=\vec{V1}$ perpendiculaire à la voilure 1 et à l'axe de roulis X).

3. La portance en vol horizontal, étant proportionnelle au produit du carré de la vitesse et du coefficient **KI,** est en fait supérieure ou égale à ce qu'elle est en vol vertical.

Au total, cela signifie que l'on dispose, en vol horizontal, d'une réserve de portance, ce qui est une situation favorable, et qu'il suffit, pour gérer cet excès de portance, de réduire la charge motrice et/ou d'orienter une partie du flux d'air, notamment celui sorti des ouïes 35 (sur la figure 5) situées à l'arrière de l'aérodyne, vers l'arrière pour être utilisé comme force propulsive.

Il faut noter ici que l'aérodyne peut aussi comporter des ailes usuelles qui, bien qu'elles ne soient pas représentées sur les figures, peuvent prendre le relais des voilures longitudinales pour assurer la portance, à partir d'une certaine vitesse en vol horizontal. Avec ou sans ces ailes usuelles, à vitesse $\vec{Vcr}$ d'avancement faible ou nulle, le dispositif de sustentation et propulsion, et donc aussi l'aérodyne qui en est équipé, peuvent être sensibles aux vents de travers (ou de côté), dont la vitesse vient s'ajouter à la vitesse de soufflage d'une voilure 1 d'un côté de la structure porteuse 3, et vient se soustraire à la vitesse de soufflage de la voilure 1 de l'autre côté de l'aérodyne, et donc vient déséquilibrer sensiblement les portances s'exerçant sur les voilures 1, de sorte qu'un tel aérodyne est particulièrement approprié à un usage lors de conditions météorologiques favorables, sans vents violents ni en rafales.

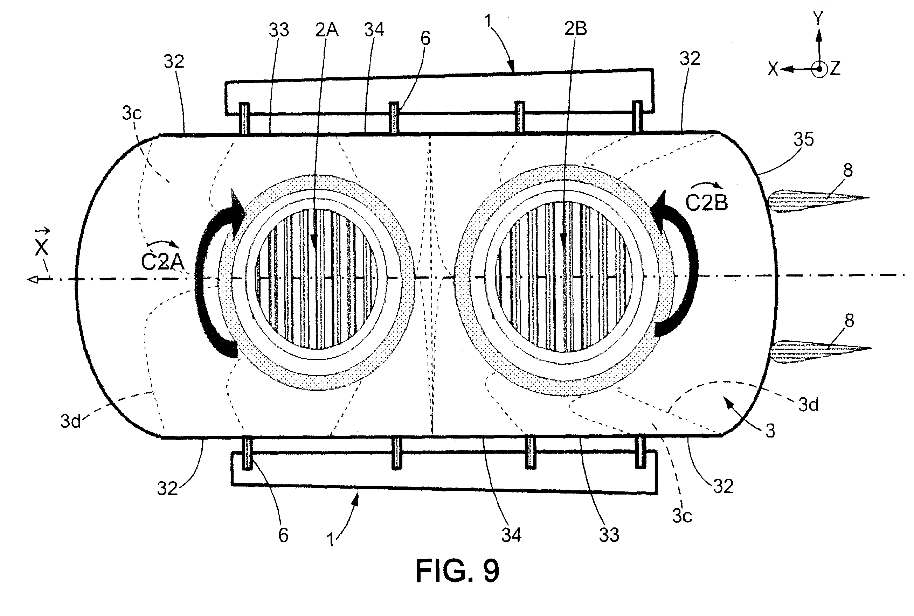

La figure 9 représente une autre variante du dispositif selon l'invention, qui comporte deux soufflantes 2A et 2B longitudinalement espacées l'une de l'autre et centrées sur l'axe de roulis X. Ce dispositif est particulièrement intéressant en ce qu'il permet, avec un même moteur (ou couple de moteurs) tel que 21 sur la figure 3, d'entraîner deux soufflantes 2A et 2B qui tournent en sens opposés, avec des valeurs de couples C2A et C2B identiques, qui s'annulent donc (C2B=-C2A). De plus, en vol de croisière $\vec{Vcr,}$ la première soufflante 2A, qui est de préférence une soufflante radiale, peut être utilisée comme expliqué précédemment en référence aux figures 8a et 8b, et simplement compenser les pertes de charges (dans ce cas **k1=0** et **k2=1)** ; donc cette première soufflante 2A ne consomme que très peu de puissance, tout en assurant la portance de l'aérodyne, et l'essentiel de la puissance motrice est absorbé par la deuxième soufflante 2B, qui est, de préférence, de type axial, et qui est essentiellement dédiée à la propulsion de l'aérodyne, et installée dans la structure porteuse 3 de sorte que son axe soit incliné de haut en bas et de l'arrière vers l'avant de l'aérodyne, d'un angle d'environ 30° sur l'axe de lacet Z, dans le plan vertical défini par les axes de roulis X et de lacet Z.

Par comparaison avec l'exemple de la figure 5, on constate que la soufflante avant 2A (sur l'axe de roulis X et dans la moitié avant de la structure porteuse 3) alimente, symétriquement par rapport au plan des axes de roulis X et lacet Z, des ouïes latérales 32, 33 et 34 de chaque côté, juste avant l'extrémité avant des deux voilures 1 ou vers chacune des deux voilures longitudinales 1, grâce aux cloisons internes 3d délimitant des canaux 3c entre les parois supérieure 3a et inférieure 3b de la structure porteuse 3, tandis que la soufflante arrière 2B alimente non seulement des ouïes latérales 34, 33 et 32 sur chaque grand côté de la structure porteuse 3, vers les voilures 1 ou juste après l'extrémité arrière de celles-ci, mais également les ouïes arrières 35 assurant la propulsion.

En variante, pour éviter que la défaillance de l'une des deux soufflantes 2A et 2B n'entraîne un défaut d'alimentation en flux d'air de sensiblement une moitié correspondante des ouïes 33 et 34 latérales essentielles pour la sustentation, les canaux 3c délimités par les cloisons internes 3d peuvent être aménagés à l'un de deux niveaux différents, selon l'axe de lacet Z, pour respectivement chacune des deux soufflantes 2A et 2B, de sorte que chacune d'elles peut contribuer à elle seule à l'alimentation en flux d'air de chacune des ouïes latérales 33 et 34 de soufflage des voilures 1, afin de développer une portance au moins suffisante pour permettre un atterrissage vertical ou court avec une vitesse verticale suffisamment limitée pour ne pas endommager l'aérodyne.

Dans cette configuration en particulier, mais non exclusivement, pour éviter que les flux d'air provenant de l'une des deux soufflantes 2A et 2B balaient essentiellement l'extrados des voilures 1 tandis que les flux d'air provenant de l'autre des deux soufflantes balaient essentiellement l'intrados des voilures 1, chacune des voilures peut être une voilure multi-plans, comportant plusieurs éléments de voilures décalés les uns par rapport aux autres à la fois selon l'axe de lacet Z et selon l'axe de tangage Y, et, en particulier, chaque voilure 1 longitudinale peut être une voilure en bi-plans, où le plan inférieur (selon l'axe Z) à l'autre est également le plus intérieur (vers la structure porteuse 3) des deux éléments de voilures cambrés dans le même sens, et éventuellement « parallèles ». Des voilures 1 multiplans peuvent également être associées à une seule soufflante 2 de sustentation, en variante.

En variante encore, les deux soufflantes 2A et 2B peuvent être identiques, radiales et contrarotatives, et dédiées uniquement à la sustentation de l'aérodyne. Dans ce cas, le dispositif ne comporte pas ou peu d'ouïes de soufflage vers l'arrière telles que 35 (sur la figure 9) pour la propulsion, qui est assurée par au moins un propulseur distinct, telle qu'au moins une hélice carénée montée à l'avant ou à l'arrière sur la structure porteuse 3, et dédiée à la propulsion en vol sensiblement horizontal, cette ou ces hélice(s) pouvant également être entraînée(s) en rotation par le ou les moteurs d'entraînement des soufflantes 2A et 2B, de préférence dans ce cas avec un transfert progressif de puissance motrice des soufflantes 2A et 2B, ou d'au moins la soufflante avant 2A, assurant la sustentation, vers la ou les hélices propulsives, au cours de la translation du vol vertical au vol horizontal, et la phase d'accélération en vol horizontal, ou encore par au moins un moteur spécifique à l'entraînement du ou des propulseurs distincts.

A titre d'exemple, on peut considérer la sustentation d'un aérodyne de manipulation de charges lourdes, dont les dimensions approximatives sont de 4m de largeur (selon l'axe de tangage Y) par 11m de longueur (selon l'axe de roulis X), pour les dimensions de la structure porteuse 3, dans une catégorie d'aérodyne de masse supérieure à 5000kg, avec deux soufflantes 2A et 2B, comme décrit ci-dessus en référence à la figure 9, où la vitesse périphérique de rotation de chaque soufflante est de l'ordre de 150m/s, et la vitesse radiale de sortie du flux de l'ordre de 50m/s. Le diamètre individuel de chacune des deux soufflantes 2A et 2B est environ de 3,5m (soit plus de 80% de la largeur de la structure), et la hauteur des pales 2b des soufflantes de 44cm environ et correspond sensiblement à la hauteur des aubages 2g du diffuseur éventuellement associé. Le débit d'air généré est envoyé sur les côtés et sur l'arrière de la structure porteuse 3 à travers des ouïes de sortie, telles que 32, 33, 34 et 35, faisant environ 40cm de hauteur, et, en particulier, le flux d'air est envoyé sur les deux voilures longitudinales 1 qui font chacune environ 10m de longueur sur 2m de largeur, sur les côtés droit et gauche de la structure porteuse 3, et offrent un coefficient de portance $KI$ compris entre 2,5 et 4. La force de levage générée, qui correspond à la masse maximum de l'aérodyne au décollage, est alors supérieure à 16000kg, et la puissance du ou des moteurs 21 de l'ordre de 2000kW.

La longueur, selon l'axe de roulis de chacune des deux voilures longitudinales 1 ainsi que la longueur de la structure porteuse 3 devant nécessairement être limitées, un bon compromis entre cette nécessaire limitation de longueur et l'optimisation des pertes de charge dans les canaux latéraux 3c d'alimentation en flux d'air des ouïes latérales de soufflage des voilures 1 consiste, en particulier lorsque le dispositif comprend une ou deux soufflantes 2 ou 2A,2B, radiale(s) ou axiale(s), à adopter une longueur de chaque voilure longitudinales 1 qui est sensiblement égale, à + ou - 20% près, à $\frac{n}{2}$ fois la circonférence d'une soufflante, n étant le nombre de soufflantes de sensiblement le même diamètre du dispositif.

Dans l'exemple qui vient d'être décrit ci-dessus, chacune des deux voilures longitudinales 1 a environ 10 m de longueur et chacune des deux soufflantes 2A et 2B a un diamètre d'environ 3,5 m, ce qui correspond à une circonférence de sensiblement 11 m pour chaque soufflante, ce qui respecte la condition mentionnée ci-dessus.

La figure 10 représente un agencement particulier et une disposition particulière d'une voilure longitudinale 1, dans cet exemple à deux éléments de voilure cambrés dont un élément de bord de fuite à faible corde séparé par une fente de l'élément de voilure principal, par rapport à la structure porteuse 3 et aux aubages directifs 5, commandés pour orienter le flux d'air de sortie vers le haut ou vers le bas (selon l'axe de lacet Z), comme décrit en référence aux figures 4 et 4a.

De manière non représentée sur la figure 10, les voilures 1 peuvent être fixées rigidement à la structure porteuse 3, par des moyens de liaison 6 tels que ceux décrits en référence à la figure 4a, par exemple, ou en variante, fixés sur un berceau intermédiaire (non représenté) qui permet de pivoter l'ensemble des voilures 1 autour de l'axe de roulis X, ou d'un axe parallèle à ce dernier, afin de pouvoir caler l'angle d'incidence des voilures 1 sur une valeur angulaire réglable dans une plage déterminée, le berceau permettant également à l'ensemble des voilures 1 de pivoter aussi, avec une amplitude analogue, autour de l'axe de tangage Y ou d'un axe parallèle à ce dernier, et également autour de l'axe de lacet Z ou d'un axe parallèle à ce dernier pour caler les voilures 1 dans une position plus favorable en vol horizontal, où les voilures 1 sont attaquées par le vent relatif dans la direction générale de leur longueur. Les voilures longitudinales 1 sont ainsi liées à la structure porteuse 3 par le berceau, ou des attaches légèrement mobiles, qui permet ou permettent de leur faire prendre un angle quelconque entre -10° et +10° par exemple par rapport à un plan de référence XY et/ou XZ et/ou YZ.

Sur la figure 10, les aubages 5 commandés à pivotement chacun autour d'un axe parallèle à l'axe de roulis dans une ouïe latérale de soufflage de la voilure 1 correspondante, immédiatement en aval des aubages directeurs 4 et entre les parois supérieure 3a et inférieure 3b de la structure porteuse 3, dévient le flux d'air de sortie légèrement vers le haut, d'un angle $\gamma 1$, de sorte que la voilure 1, qui, dans la figure 4 comme dans la figure 1, a une incidence $\alpha 1$ par rapport au flux d'air, présente dans la figure 10 une incidence $\alpha 1 - \gamma 1$. Cet agencement et cette disposition sont favorables en ce qu'ils permettent de rapprocher la résultante $\vec{F}$ des forces aérodynamiques s'exerçant sur la voilure 1 de la verticale, et donc d'augmenter la portance effective (puisque $\vec{F}$ est la somme de la force de portance $\vec{Fl}$ et de la force de traînée $\vec{Fd}$, de sorte que si $\vec{Fd}$ est grande, $\vec{F}$ est significativement plus grande que $\vec{Fl}$).

L'orientation du flux d'air de sortie d'une ouïe latérale 33 ou 34 vers le haut, d'un angle $\gamma\mathbf{1}$, de préférence compris entre 10° et 45°, exerce une force impulsionnelle vers le bas sur la structure porteuse 3, qui vient donc se soustraire à la portance développée sur les voilures 1, mais le bilan reste très largement positif, car la résultante des forces $\vec{F}$ est en général significativement plus grande que la force de portance $\vec{Fl}$.

La figure 11 représente une variante du dispositif de l'invention en situation d'avarie, dans laquelle le dispositif et l'aérodyne qui en est équipé sont en chute libre, par exemple en cas de panne moteur. Dans ce cas, comme déjà mentionné ci-dessus, les pales 2b de la ou des soufflantes 2A et 2B et les aubages 2g du ou des redresseurs sont pivotés pour fermer les passages entre elles et entre eux, afin de conserver l'énergie cinétique du rotor de la soufflante 2 et du volant d'inertie 2i, comme décrit dans l'exemple de la figure 6, et ces pales 2b et aubages 2g sont réactivés, c'est-à-dire à nouveau pivotés de façon à ouvrir les passages entre elles et entre eux, à l'approche du sol, pour générer, grâce à l'énergie cinétique emmagasinée, un flux d'air incident sur les voilures 1 permettant de freiner la chute. Dans la variante de la figure 11, de plus, des trappes 36, dont une seule est représentée sur la figure 11, sont ménagées dans la paroi inférieure 3b de la structure porteuse 3 et articulées à pivotement en 37 sur cette paroi inférieure ou plancher 3b, dans la partie de cette paroi inférieure 3b qui délimite les canaux 3c, en aval des aubages 2g de redresseur de la soufflante 2 correspondante, et directement en amont des grilles d'aubages 4 et 5 directeurs dans l'ouïe latérale correspondante de sortie du flux d'air de soufflage des voilures 1, l'axe de pivot 37, sensiblement parallèle à l'axe de roulis de chaque trappe 36 étant en amont de la trappe 36, par rapport au sens d'écoulement normal du flux d'air, de sorte que les trappes 36, sous la pression du vent vertical $\vec{Vz}$ du fait de la chute du dispositif et de l'aérodyne, vont s'ouvrir en pivotant vers l'intérieur des canaux 3c, et permettre une circulation supplémentaire d'air sur les voilures 1 pour freiner la chute de l'aérodyne et de son dispositif de sustentation et propulsion.

Ainsi, les trappes 36 permettent de récupérer une partie du flux d'air correspondant au vent relatif vertical ascendant $\vec{Vz}$ pour la convertir en un flux d'air de soufflage additionnel, qui contribue à générer sur les voilures 1 une portance augmentée, pour freiner la chute de l'aérodyne.

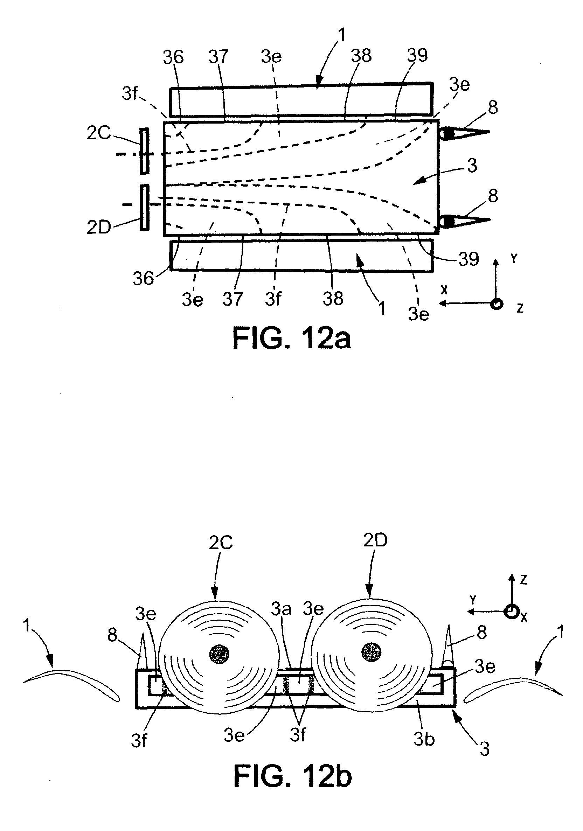

Dans la variante du dispositif de l'invention selon les figures 12a et 12b, deux soufflantes axiales 2C et 2D, identiques l'une à l'autre et d'axes parallèles à l'axe de roulis X de l'aérodyne et de la structure porteuse 3, sont montées à l'avant de la structure porteuse 3, symétriquement l'une de l'autre de part et d'autre du plan longitudinal médian défini par les axes de roulis X et de lacet Z. Ces deux soufflantes 2C et 2D sont, par exemple, réalisées sous la forme de deux hélices propulsives carénées, dont les carènes sont fixées légèrement en porte-à-faux en avant de la structure porteuse 3, de forme sensiblement rectangulaire et supportant deux dérives orientables 8 à l'arrière.

Une partie du flux d'air axial des deux soufflantes 2C et 2D est captée axialement dans l'entrée de canaux coudés 3e, délimités par des cloisons 3f cintrées latéralement entre les parois supérieure 3a et inférieure 3b (ou plancher) de la structure porteuse 3, ces canaux coudés 3e dirigeant latéralement le flux capté et débouchant latéralement dans les deux grands côtés de la structure 3, par des ouïes latérales 36, 37, 38 et 39 délivrant des flux d'air de soufflage des voilures longitudinales 1, de part et d'autre de la structure 3, pour générer une portance s'ajoutant à celle développée par les voilures 1 du fait du vent relatif longitudinal résultant de la fraction propulsive du flux d'air produit par les deux soufflantes axiales 2C et 2D et qui est la fraction non captée par les canaux 3e, sur un aérodyne qui, dans ce cas, est plutôt de type STOL que VTOL.

Le ou les moteurs d'entraînement des soufflantes 2C et 2D n'est ou ne sont pas représenté(s) pour plus de clarté du dessin, mais peut ou peuvent être monté(s) dans une soute fixée sous la structure porteuse 3, comme sur la figure 3.

Pour un aérodyne de faible masse, un tel dispositif peut ne comporter qu'une seule soufflante axiale.

Des canaux, tels que 3e, de captation de flux d'air axial ou axiaux, réorienté(s) en flux latéraux de soufflage des voilures 1, peuvent également être agencés dans les structures porteuses 3 des exemples de dispositifs des figures 3 à 7 et 9 à 11, au-dessus ou en-dessous des canaux 3c délimités par les cloisons 3d et alimentés par la ou les soufflantes 2A ou 2B. Dans ces cas, en phase de transition du vol vertical au vol horizontal, et en phase d'accélération en vol horizontal, la puissance motrice utilisée pour assurer la sustentation peut être progressivement transférée en puissance de propulsion, de sorte que peu ou pas de puissance est absorbée par la ou les soufflante(s) essentiellement dédiée(s) à la sustentation et fournie par leur(s) moteur(s). En vol de croisière, la propulsion absorbe pratiquement 100% de la puissance motrice, et la sustentation est assurée sans consommation de puissance supplémentaire, par captage d'au moins un flux d'air axial réorienté latéralement pour le soufflage des voilures 1.

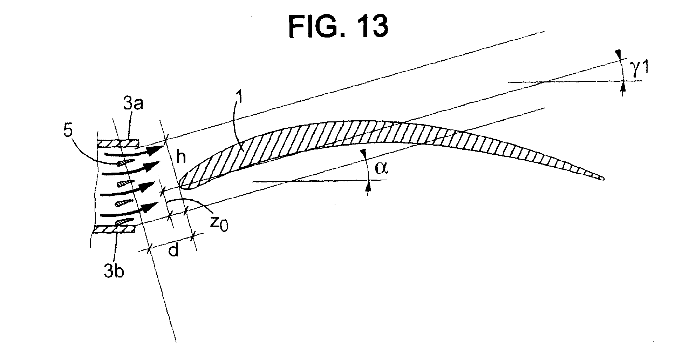

La figure 13 représente schématiquement, en coupe transversale par un plan parallèle au plan défini par les axes de tangage Y et lacet Z, une disposition particulièrement avantageuse d'une voilure longitudinale 1, dans cet exemple en un seul élément de voilure cambré, par rapport au bord latéral en regard de la structure porteuse 3, sensiblement comme représenté sur la figure 10. Dans la disposition avantageuse de la figure 13, on désigne par h la hauteur (ou épaisseur) du flux d'air sortant d'une ouïe latérale, délimitée entre les bords latéraux des parois supérieure 3a et inférieure 3b, et dévié d'un angle γ**1** par la grille d'aubages 5 disposée dans cette ouïe, l'angle α étant l'incidence de la voilure 1 dans la direction du flux. On désigne de plus par d la distance séparant le bord d'attaque de la voilure 1 de la section de sortie de cette ouïe, perpendiculairement à la direction du flux dévié, c'est-à-dire parallèlement à la hauteur h, et z0 désigne l'altitude du point extrême correspondant au bord d'attaque de la voilure 1, dans le flux dévié de hauteur h. Dans la disposition favorable de la figure 13, les deux conditions suivantes sont vérifiées :

$$1)\quad 0 \leq \frac{z0}{h} \leq 0,5$$

et

$$2)\quad 0 \leq d \leq 10h\,.$$

Le respect de ces conditions permet d'optimiser le soufflage des voilures longitudinales 1.

## Revendications

1. Dispositif de sustentation et propulsion, pour un aérodyne à décollage et atterrissage vertical ou court, par l'effet de portance obtenu par soufflage d'un flux d'air produit par un générateur de flux d'air (2 ; 2A, 2B ; 2C , 2D) sur des voilures (1) sustentatrices reliées à une structure porteuse (3), le dispositif comprenant deux voilures longitudinales (1), sensiblement rectilignes, disposées de part et d'autre de la structure porteuse (3) et s'étendant sensiblement parallèlement à l'axe de roulis (X) du dispositif, les deux voilures longitudinales (1) étant symétriques l'une de l'autre par rapport au plan défini par les axes de roulis (X) et de lacet (Z), **caractérisé en ce que** le générateur de flux d'air comprend au moins une soufflante (2), à axe vertical ou faisant un angle maximum d'environ 30° avec l'axe de lacet (Z), et montée dans la structure porteuse (3) avec un diamètre maximum (D1), qui correspond au diamètre extrême de rotation des pales (2b) de soufflante, supérieur à 50% de la largeur (*l*1) de la structure porteuse (3).

2. Dispositif selon la revendication 1, **caractérisé par le fait que** ladite structure porteuse (3) présente, dans la direction d'avancement en vol de croisière, qui est la direction de l'axe de roulis (X), une longueur supérieure à sa largeur, dans la direction de l'axe de tangage (Y) du dispositif, et de préférence la longueur de la structure porteuse (3) est supérieure à deux fois sa largeur.

3. Dispositif selon l'une quelconque des revendications 1 et 2, **caractérisé par le fait que** les génératrices des surfaces portantes des voilures longitudinales (1) sont sensiblement rectilignes et sensiblement parallèles à l'axe de roulis (X) du dispositif ou faiblement inclinées sur cet axe (X).

4. Dispositif selon l'une quelconque des revendications 1 à 3, **caractérisé en ce que** les voilures longitudinales (1) sont de type hyper-sustentateur, et comportent chacune au moins un élément de voilure présentant un profil avec une cambrure supérieure à 5% de la corde dudit profil.

5. Dispositif selon la revendication 3 ou 4 telle que rattachée à la revendication 3, **caractérisé par le fait que** les génératrices les plus extrêmes, de bord d'attaque (*x1x1*), et de bord de fuite (*x2x2*), des voilures longitudinales (1) forment, avec l'axe de roulis (X) du dispositif, un angle inférieur à 5°, et que la génératrice de bord de fuite converge vers celle du bord d'attaque du côté de l'avant de l'axe de roulis (X) ;

6. Dispositif selon l'une quelconque des revendications 1 à 5, **caractérisé par le fait que** les voilures longitudinales (1) sont liées à la structure porteuse (3) de façon à ce que lesdites voilures (1) puissent prendre un angle quelconque entre -10° et +10° par rapport à un plan défini par deux des trois axes de roulis (X), tangage (Y) et lacet (Z) du dispositif.

7. Dispositif selon l'une quelconque des revendications 1 à 6, **caractérisé par le fait que** les éléments des voilures longitudinales (1) sont reliés entre eux et à la structure porteuse (3) par des éléments structurels (6) présentant, en section, un profil aérodynamique, comme un profil d'aile, et agencés de préférence de sorte que les plans de symétrie médians de ces profils soient parallèles à l'axe de roulis (X) du dispositif.

8. Dispositif selon l'une quelconque des revendications 1 à 7, **caractérisé par le fait que** le flux d'air de soufflage des voilures (1) est orienté, à la sortie de la structure porteuse (3), dans une direction vers l'arrière ou l'avant du dispositif, et/ou dans une direction vers le haut ou le bas du dispositif, par deux systèmes de grilles à ailettes ou à aubages (4, 5) pilotés.

9. Dispositif selon l'une quelconque des revendications 1 à 8, **caractérisé par le fait que** le flux d'air de soufflage des voilures (1) est dirigé vers le haut, à sa sortie de la structure porteuse (3), avec un angle (γ**1**) de préférence supérieur à 10° par rapport à l'horizontale, de façon à ce que la résultante ($\vec{F}$) des forces de portance ($\vec{Fl}$) et de traînée ($\vec{Fd}$) exercées sur ladite voilure longitudinale (1) soit sensiblement verticale.

10. Dispositif selon l'une quelconque des revendications 1 à 9, **caractérisé par le fait que** des ouïes de sortie latérale du flux d'air sont partagées en au moins trois, et de préférence quatre, catégories et pilotées indépendamment : des ouïes (34) en vis-à-vis de la voilure (1) pour assurer la portance du dispositif, des ouïes (33) en vis-à-vis des extrémités de la voilure (1) pour assurer la stabilité autour des axes de roulis (X) et tangage (Y), des ouïes (32) sans vis-à-vis pour la stabilité en rotation autour de l'axe de lacet (Z), et, éventuellement, des ouïes (35) sur l'arrière pour assurer la propulsion.

11. Dispositif selon la revendication 6 **caractérisé par le fait que** les voilures longitudinales (1) et au moins un élément structurel qui les relie à la structure porteuse (3) forment un ensemble rigide pouvant être calé autour d'un axe d'articulation parallèle ou confondu avec l'axe de roulis (X) et/ou d'un axe d'articulation parallèle ou confondu avec l'axe de tangage (Y).

12. Dispositif selon l'une quelconque des revendications 1 à 11, **caractérisé par le fait que** le générateur de flux d'air (2) est alimenté par une ouverture d'aspiration (2a) associée à un réseau d'aubages (10), et agencée et orientée de sorte à capter, en vol sensiblement horizontal, un flux d'air incident, qui est dévié par le réseau d'aubages (10) et aspiré par ledit générateur (2), de préférence à au moins une soufflante radiale, puis soufflé transversalement sur les voilures longitudinales (1), après passage dans un circuit agencé dans la structure porteuse (3) et ledit générateur (2), et dont les caractéristiques aérodynamiques permettent de conserver une grand part de l'enthalpie initiale du flux d'air incident, les aubages (10) dudit réseau étant de préférence profilés et disposés de façon à générer une portance complémentaire à celle produite par les dites voilures (1).

13. Dispositif selon l'une quelconque des revendications 1 à 12, **caractérisé en ce que** le générateur de flux d'air comprend au moins deux soufflantes (2A, 2B), dont les sens de rotation sont opposés de sorte à annuler le couple gyroscopique global des soufflantes (2A, 2B).

14. Dispositif selon l'une quelconque des revendications 1 à 13, **caractérisé par le fait que** la ou les soufflantes (2 ; 2A, 2B) comporte(nt) elle(s)-même(s) une masse inertielle ou bien un volant d'inertie (2i) monté (e) sur le même axe que la soufflante correspondante, et proche d'elle, et entraîné(e) en rotation synchrone ou contrarotative.

15. Dispositif selon l'une quelconque des revendications 1 à 14, **caractérisé en ce qu'**au moins une soufflante (2) est une soufflante radiale à pales (2b) inclinées vers l'arrière par rapport au sens de rotation de la soufflante.

16. Dispositif selon l'une quelconque des revendications 1 à 15, **caractérisé par le fait que** la ou les soufflantes radiale(s) (2 ; 2A, 2B) comporte (nt) des pales (2b) pouvant pivoter chacune autour d'un axe sensiblement parallèle à l'axe de rotation de la soufflante correspondante, et dont l'orientation autour de l'axe de pivotement est commandée, lesdites pales (2b) de soufflante étant associées à un diffuseur fixe comportant des aubages (2g), dont chacun est également pivotant autour d'un axe de pivotement parallèle à celui desdites pales (2b) de soufflante, et dont l'orientation est également commandée autour dudit axe de pivotement (Zi) de façon à adapter les incidences des pales (2b) de soufflante et aubages (2g) de diffuseur à la puissance requise, et en particulier à réduire quasiment à 0 la puissance consommée par une soufflante, par pivotement desdites pales (2b) et desdits aubages (2g) de sorte à fermer les passages entre elles et entre eux, pour conserver une énergie de secours, en cas d'avarie, ou mettre en attente une soufflante pendant une phase de vol.

17. Dispositif selon l'une quelconque des revendications 1 à 16, **caractérisé par le fait que** le flux d'air généré par la ou les soufflantes (2 ; 2A, 2B) pour souffler les voilures longitudinales (1) est animé d'une vitesse comprise entre environ 15m/s et 100m/s, et de préférence entre environ 20m/s et 70m/s.

18. Dispositif selon l'une quelconque des revendications 1 à 17, **caractérisé en ce que** la paroi inférieure (3b) délimitant des canaux (3c) d'alimentation en flux d'air de soufflage des voilures (1), dans la structure porteuse (3), comporte des trappes articulées (36) s'ouvrant sous la pression d'un vent relatif vertical ascendant ($\vec{Vz}$) pour capter une partie dudit vent relatif ($\vec{Vz}$) et la convertir en une circulation d'air soufflant les voilures (1) pour développer une portance limitant la vitesse de descente du dispositif.

19. Dispositif selon l'une quelconque des revendications 1 à 18, **caractérisé par le fait qu'**il comprend de plus au moins une soufflante axiale d'axe parallèle ou confondu avec l'axe de roulis (X) et montée à l'avant de la structure porteuse (3), et dont le flux d'air axial de sortie est en partie capté dans l'entrée axiale de canaux (3e) ménagés dans la structure porteuse (3) et courbés latéralement de sorte à déboucher latéralement par des ouïes (36, 37, 38, 39) de soufflage des voilures longitudinales (1), la partie du flux d'air axial de sortie de la ou des soufflantes axiales (2C, 2D) non captée par les canaux (3e) assurant la propulsion.

20. Dispositif selon l'une quelconque des revendications 1 à 19, **caractérisé par le fait que** chacune des voilures longitudinales (1) est agencée et disposée par rapport à la structure porteuse (3) de sorte à vérifier la double condition suivante :

$$0 \le \frac{z0}{h} \le 0,5 \quad \text{et} \quad 0 \le d \le 10h,$$ où **h** est la hauteur du flux d'air de soufflage d'une voilure (1) et dévié vers le haut d'un certain angle, **h** étant mesurée perpendiculairement à la direction du flux dévié, **d** est la distance entre le bord d'attaque de la voilure (1) et la section de sortie dudit flux d'air de la structure porteuse (B), cette distance étant mesurée parallèlement au flux dévié, et z0 est l'altitude du point extrême du bord d'attaque de la voilure (1) dans le flux d'air dévié de hauteur **h**.

21. Dispositif selon l'une quelconque des revendications 1 à 20, **caractérisé en ce que** la longueur, selon l'axe de roulis (X), de chaque voilure longitudinale (1) est sensiblement égale, à + ou - 20% près, à $\frac{n}{2}$ fois la circonférence d'une soufflante (2 ; 2A, 2B), n étant le nombre de soufflantes, de sensiblement le même diamètre, du dispositif, en particulier dans le cas où le dispositif comprend une ou deux soufflantes.

22. Aérodyne à décollage et atterrissage vertical ou court, comprenant une structure porteuse (3) supportant un dispositif de sustentation et propulsion **caractérisé en ce que** ledit dispositif est selon l'une quelconque des revendications 1 à 21, et supporté en partie haute de ladite structure porteuse (3), laquelle est aménagée, en partie basse, en nacelle (31) logeant notamment une motorisation (21) et disposée entre les deux voilures sustentatrices longitudinales (1) dudit dispositif.

**Patentansprüche**

1. Vorrichtung zum Hub und Antrieb eines senkrecht oder kurz startenden und landenden Luftfahrzeugs durch die Auftriebswirkung, die durch Blasen eines durch einen Luftstromgenerator (2; 2A, 2B; 2C, 2D) erzeugten Luftstroms auf mit einer Tragstruktur (3) verbundene Auftriebsflügel (1) erhalten wird, wobei die Vorrichtung zwei im Wesentlichen rechteckige Längsflügel (1) umfasst, die auf beiden Seiten der Tragstruktur (3) angeordnet sind und sich im Wesentlichen parallel zur Rollachse (X) der Vorrichtung erstrecken, wobei die beiden Längsflügel (1) in Bezug auf die durch die Rollachse (X) und die Gierachse (Z) definierte Ebene symmetrisch zueinander sind, **dadurch gekennzeichnet, dass** der Luftstromgenerator zumindest ein in der Tragstruktur (3) angebrachtes Gebläse (2) mit einer vertikalen Achse oder einer Achse, die einen maximalen Winkel von etwa 30° zur Gierachse (Z) bildet, mit einem maximalen Durchmesser (D1), der dem äußersten Rotationsdurchmesser der Gebläseblätter (2b) entspricht und mehr als 50 % der Breite (l1) der Tragstruktur (3) beträgt, umfasst.

2. Vorrichtung nach Anspruch 1, **gekennzeichnet durch** die Tatsache, dass die Tragstruktur (3) in der Reiseflugrichtung, welche die Richtung der Rollachse (X) ist, eine Länge aufweist, die größer als ihre Breite in der Richtung der Nickachse (Y) der Vorrichtung ist, und dass vorzugsweise die Länge der Tragstruktur (3) mehr als doppelt so groß wie deren Breite ist.

3. Vorrichtung nach einem der Ansprüche 1 und 2, **gekennzeichnet durch** die Tatsache, dass die Mantellinien der Tragflächen der Längsflügel (1) im Wesentlichen rechteckig und im Wesentlichen parallel zur Rollachse (X) der Vorrichtung oder bezüglich dieser Achse (X) leicht geneigt sind.

4. Vorrichtung nach einem der Ansprüche 1 bis 3, **dadurch gekennzeichnet, dass** die Längsflügel (1) vom Hochauftriebstyp sind und jeweils zumindest ein Flügelelement beinhalten, das ein Profil mit einer Krümmung von mehr als 5 % der Sehne des Profils aufweist.

5. Vorrichtung nach Anspruch 3 oder 4, wie zurückbezogen auf Anspruch 3, **gekennzeichnet durch** die Tatsache, dass die äußersten Mantellinien der Anströmkante ($\chi 1\ \chi 1$) und der Hinterkante ($\chi 2\ \chi 2$) der Längsflügel (1) einen Winkel von weniger als 5° zur Rollachse (X) der Vorrichtung ausbilden und dass die Mantellinie der Hinterkante mit der der Anströmkante auf der Vorderseite der Rollachse (X) zusammenläuft.

6. Vorrichtung nach einem der Ansprüche 1 bis 5, **gekennzeichnet durch** die Tatsache, dass die Längsflügel (1) so mit der Tragstruktur (3) verbunden sind, dass die Flügel (1) einen beliebigen Winkel zwischen -10° und +10° in Bezug auf eine Ebene einnehmen können, die **durch** zwei der drei Achsen der Vorrichtung (Rollachse (X), Nickachse (Y) und Gierachse (Z)) definiert ist.

7. Vorrichtung nach einem der Ansprüche 1 bis 6, **gekennzeichnet durch** die Tatsache, dass die Elemente der Längsflügel (1) miteinander und mit der Tragstruktur (3) **durch** Bauelemente (6) verbunden sind, die im Querschnitt ein aerodynamisches Profil, beispielsweise ein Flügelprofil, aufweisen und die vorzugsweise so eingerichtet sind, dass die mittleren Symmetrieebenen dieser Profile parallel zur Rollachse (X) der Vorrichtung sind.

8. Vorrichtung nach einem der Ansprüche 1 bis 7, **gekennzeichnet durch** die Tatsache, dass der Gebläseluftstrom der Flügel (1) **durch** zwei gesteuerte Lamellen- oder Schaufelgittersysteme (4, 5) beim Austritt aus der Tragstruktur (3) in eine von der Vorrichtung nach vorn oder hinten führende Richtung und/oder in eine von der Vorrichtung nach oben oder nach unten führende Richtung gerichtet wird.

9. Vorrichtung nach einem der Ansprüche 1 bis 8, **gekennzeichnet durch** die Tatsache, dass der Gebläseluftstrom der Flügel (1) bei seinem Austritt aus der Tragstruktur (3) mit einem Winkel ($\gamma 1$) von vorzugsweise mehr als 10° in Bezug auf die Horizontale nach oben gerichtet wird, sodass die Resultierende ($\vec{F}$) der auf die Längsflügel (1) wirkenden Auftriebskraft ($\vec{F}l$) und Widerstandskraft ($\vec{F}d$) im Wesentlichen vertikal ist.

10. Vorrichtung nach einem der Ansprüche 1 bis 9, **gekennzeichnet durch** die Tatsache, dass seitliche Austrittsöffnungen des Luftstroms in zumindest drei und vorzugsweise vier Kategorien unterteilt sind und unabhängig voneinander gesteuert werden: Öffnungen (34) gegenüber dem Flügel (1) zur Gewährleistung des Auftriebs der Vorrichtung, Öffnungen (33) gegenüber den Enden des Flügels (1) zur Gewährleistung der Stabilität bezüglich der Rollachse (X) und der Nickachse (Y), Öffnungen (32) ohne Gegenüber für die Rotationsstabilität bezüglich der Gierachse (Z) und gegebenenfalls Öffnungen (35) an der Rückseite zur Gewährleistung des Antriebs.

11. Vorrichtung nach Anspruch 6 **gekennzeichnet durch** die Tatsache, dass die Längsflügel (1) und zumindest ein Bauelement, das diese mit der Tragstruktur (3) verbindet, eine starre Baugruppe bilden, die um eine zur Rollachse (X) parallele oder mit dieser zusammenfallende Gelenkachse und/oder eine zur Nickachse (Y) parallele oder mit dieser zusammenfallende Gelenkachse festsetzbar ist.

12. Vorrichtung nach einem der Ansprüche 1 bis 11, **gekennzeichnet durch** die Tatsache, dass der Luftstromgenerator (2) über eine mit einem Schaufelnetz (10) verbundene Ansaugöffnung (2a) gespeist wird, die so eingerichtet und ausgerichtet ist, das bei im Wesentlichen horizontalem Flug ein einfallender Luftstrom erfasst wird, der **durch** das Schaufelnetz (10) umgelenkt und **durch** den Generator (2), der vorzugsweise zumindest ein Radialgebläse aufweist, angesaugt und anschließend quer auf die Längsflügel (1) geblasen wird, nachdem er einen in der Tragstruktur (3) und im Generator (2) eingerichteten Kreislauf passiert hat, dessen aerodynamische Eigenschaften es ermöglichen, einen großen Teil der Ausgangsenthalpie des eintretenden Luftstroms zu bewahren, wobei die Schaufeln (10) des Netzes vorzugsweise profiliert und so angeordnet sind, dass sie einen Auftrieb erzeugen, der zu dem **durch** die Flügel (1) erzeugten Auftrieb komplementär ist.

13. Vorrichtung nach einem der Ansprüche 1 bis 12, **dadurch gekennzeichnet, dass** der Luftstromgenerator zumindest zwei Gebläse (2A, 2B) umfasst, deren Rotationsrichtungen einander entgegengesetzt sind, sodass das Gesamtkreiselmoment der Gebläse (2A, 2B) aufgehoben wird.

14. Vorrichtung nach einem der Ansprüche 1 bis 13, **gekennzeichnet durch** die Tatsache, dass das bzw. die Gebläse (2; 2A, 2B) selbst eine träge Masse oder ein Schwungrad (2i), die bzw. das auf derselben Achse wie das entsprechende Gebläse und in dessen Nähe angebracht ist und gleich- oder gegenläufig rotierend bewegt wird, aufweist bzw. aufweisen.

15. Vorrichtung nach einem der Ansprüche 1 bis 14, **dadurch gekennzeichnet, dass** zumindest ein Gebläse (2) ein Radialgebläse mit Blättern (2b) ist, die in Bezug auf die Rotationsrichtung des Gebläses nach hinten gerichtet sind.

16. Vorrichtung nach einem der Ansprüche 1 bis 15, **gekennzeichnet durch** die Tatsache, dass das bzw. die Radialgebläse (2; 2A, 2B) Blätter (2b) beinhaltet bzw. beinhalten, die jeweils bezüglich einer zur Rotationsachse des entsprechenden Gebläses im Wesentlichen parallelen Achse schwenkbar sind und deren Ausrichtung bezüglich der Schwenkachse kontrolliert wird, wobei die Gebläseblätter (2b) mit einem stationären Diffusor verbunden sind, der Schaufeln (2g) beinhaltet, wovon jede ebenfalls bezüglich einer zur Schwenkachse der Gebläseblätter (2b) parallelen Schwenkachse schwenkbar ist und deren Ausrichtung in Bezug auf die Schwenkachse (Zi) ebenfalls kontrolliert wird, um die Anstellung der Gebläseblätter (2b) und der Diffusorschaufeln (2g) an die geforderte Leistung anzupassen und insbesondere die durch ein Gebläse verbrauchte Leistung quasi auf 0 zu reduzieren, indem die Blätter (2b) und die Schaufeln (2g) so geschwenkt werden, dass die Übergänge zwischen ihnen geschlossen sind, um eine Notenergie für Notfälle zu bewahren oder um ein Gebläse während einer Flugphase in den Wartezustand zu versetzen.

17. Vorrichtung nach einem der Ansprüche 1 bis 16, **gekennzeichnet durch** die Tatsache, dass der **durch** das bzw. die Gebläse (2; 2A, 2B) erzeugte Luftstrom zum Beblasen der Längsflügel (1) mit einer Geschwindigkeit von 15 m/s bis 100m/s, und vorzugsweise von 20 m/s bis 70 m/s, bewegt wird.

18. Vorrichtung nach einem der Ansprüche 1 bis 17, **dadurch gekennzeichnet, dass** die Untenwand (3b), die Kanäle (3c) zur Versorgung der Flügel (1) mit Gebläseluftstrom in der Tragstruktur (3) begrenzt, gelenkig angeordnete Klappen (36) beinhaltet, die sich unter dem Druck eines vertikal aufsteigenden Flugwinds ($\vec{V}z$) öffnen, um einen Teil des Flugwinds ($\vec{V}z$) zu erfassen und in eine Luftströmung umzuwandeln, die auf die Flügel geblasen wird, um einen Auftrieb zu entwickeln, der die Sinkgeschwindigkeit der Vorrichtung begrenzt.

19. Vorrichtung nach einem der Ansprüche 1 bis 18, **gekennzeichnet durch** die Tatsache, dass sie zusätzlich zumindest ein Axialgebläse mit einer zur Rollachse (X) parallelen oder mit dieser zusammenfallenden Achse umfasst, das vorn an der Tragstruktur (3) angebracht ist und dessen axialer Austrittsluftstrom zum Teil in den axialen Einlass von Kanälen (3e) aufgenommen wird, die in der Tragstruktur (3) eingerichtet und so seitlich gekrümmt sind, dass sie seitlich in Form von Öffnungen (36, 37, 38, 39) zum Beblasen der Längsflügel (1) münden, wobei der Teil des axialen Austrittsluftstroms des bzw. der Axialgebläse (2C, 2D), der nicht von den Kanälen (3e) erfasst wird, den Antrieb gewährleistet.

20. Vorrichtung nach einem der Ansprüche 1 bis 19, **gekennzeichnet durch** die Tatsache, dass jeder der Längsflügel (1) in Bezug auf die Tragstruktur (3) so eingerichtet und angeordnet ist, dass die folgende Doppelbedingung erfüllt ist: $0 \leq \frac{z0}{h} \leq 0{,}5$ und $0 \leq d \leq 10h$, wobei $h$ die Höhe des Luftstroms zum Beblasen eines Flügels (1), der um einem bestimmten Winkel nach oben umgelenkt wird, ist, wobei h senkrecht zur Richtung des umgelenkten Stroms gemessen wird, d der Abstand zwischen der Anströmkante des Flügels (1) und dem Austrittsabschnitt des Luftstroms aus der Tragstruktur (B) ist, wobei dieser Abstand parallel zum umgelenkten Strom gemessen wird, und z0 die Flughöhe des äußersten Punkts der Anströmkante des Flügels (1) im umgelenkten Luftstrom mit der Höhe $h$ ist.

21. Vorrichtung nach einem der Ansprüche 1 bis 20, **dadurch gekennzeichnet, dass** die Länge jedes Längsflügels (1) entlang der Rollachse (X) im Wesentlichen dem $\frac{n}{2}$ . fachen des Umfangs eines Gebläses (2; 2A, 2B) +/- 20 % entspricht, wobei n die Anzahl der Gebläse der Vorrichtung mit im Wesentlichen demselben Durchmesser ist, insbesondere in dem Fall, in dem die Vorrichtung ein oder zwei Gebläse umfasst.

22. Senkrecht oder kurz startendes und landendes Luftfahrzeug, umfassend eine Tragstruktur (3), die eine Hub- und Antriebsvorrichtung trägt, **dadurch gekennzeichnet, dass** die Vorrichtung einem der Ansprüche 1 bis 21 entspricht und im oberen Teil der Tragstruktur (3) getragen wird, die im unteren Teil in einer Gondel (31) eingerichtet ist, die insbesondere eine Motorisierung (21) aufnimmt und zwischen den beiden Auftriebslängsflügeln (1) der Vorrichtung angeordnet ist.

## Claims

1. Lift and propulsion device for a vertical or short take-off and landing aerodyne, by the effect of lift obtained by blowing an airflow produced by an airflow generator (2; 2A, 2B; 2C , 2D) over lift airfoils (1) connected to a support structure (3), the device comprising two substantially rectilinear longitudinal airfoils (1) disposed on either side of the support structure (3) and substantially parallel to the roll axis (X) of the device, the two longitudinal airfoils (1) being symmetrical to each other with respect to the plane defined by the roll axis (X) and the yaw axis (Z), **characterized in that** the airflow generator comprises at least one blower (2) the axis whereof is vertical or at a maximum angle of approximately 30° to the yaw axis (Z), mounted in the support structure (3), with a maximum diameter (D1) that corresponds to the extreme rotation diameter of the blower blades (2b), more than 50% of the width ($l$1) of the support structure (3).

2. Device according to claim 1, **characterized in that** said support structure (3) has, in the direction of forward cruising flight, which is the direction of the roll axis (X), a length greater than its width, in the direction of the pitch axis (Y) of the device, and the length of the support structure (3) is preferably greater than twice its width.

3. Device according to either of claims 1 and 2, **characterized in that** the generatrices of the lifting surfaces of the longitudinal airfoils (1) are substantially rectilinear and substantially parallel to the roll axis (X) of the device or slightly inclined to that axis (X).

4. Device according to any one of claims 1 to 3, **characterized in that** the longitudinal airfoils (1) are of hyperlift type and each includes at least one airfoil element having a profile with a camber greater than 5% of the chord of said profile.

5. Device according to claim 3 or 4 when dependent on claim 3, **characterized in that** the most extreme generatrices, of the leading edge ($x$1$x$1) and the trailing edge ($x$2$x$2), of the longitudinal airfoils (1) form, with the roll axis (X) of the device, an angle less than 5°, and the generatrix of the trailing edge converges toward that of the leading edge forward the roll axis (X).

6. Device according to any one of claims 1 to 5, **characterized in that** the longitudinal airfoils (1) are connected to the support structure (3) in such a way that said airfoils (1) may assume any angle from -10° to +10° relative to a plane defined by two of the roll axis (X), pitch axis (Y) and yaw axis (Z) of the device.

7. Device according to any one of claims 1 to 6, **characterized in that** the elements of the longitudinal airfoils (1) are connected to each other and to the support structure (3) by structural elements (6) having in section an aerodynamic profile such as a wing profile and preferably arranged so that the median planes of symmetry of these profiles are parallel to the roll axis (X) of the device.

8. Device according to any one of claims 1 to 7, **characterized in that** the airflow for blowing the airfoils (1) is oriented, at the outlet from the support structure (3), in a direction toward the front or the rear of the device, and/or in a direction toward the top or the bottom of the device, by two grille systems (4, 5) with controlled fins or blades.

9. Device according to any one of claims 1 to 8, **characterized in that** the airflow for blowing the airfoils (1) is directed upward, where it exits the support structure (3), at an angle ($\gamma$1) preferably greater than 10° relative to the horizontal, in such a way that the resultant ($\vec{F}$) of the lift force ($\vec{F}l$) and the drag force ($\vec{F}d$) exerted on said longitudinal airfoil (1) is substantially vertical.

10. Device according to any one of claims 1 to 9, **characterized in that** lateral airflow outlet vents are divided into at least three and preferably four categories and controlled independently: vents (34) facing the airfoil (1) to provide the lift of the device, vents (33) facing the extremities of the airfoil (1) to assure stability about the roll axis (X) and the pitch axis (Y), vents (32) that do not face anything for stability in rotation about the yaw axis (Z), and, where applicable, vents (35) at the rear to provide propulsion.

11. Device according to claim 6 **characterized in that** the longitudinal airfoils (1) and at least one structural element that connects them to the support structure (3) form a rigid assembly that may be locked with respect to an articulation axis parallel to or coinciding with the roll axis (X) and/or an articulation axis parallel to or coinciding with the pitch axis (Y).

12. Device according to any one of claims 1 to 11, **characterized in that** the airflow generator (2) is fed via an aspiration opening (2a) associated with an array of blades (10) and adapted and oriented so as to capture in substantially horizontal flight an incident airflow that is deflected by the array of blades (10) and aspirated by said generator (2), preferably with at least one radial blower, and then blown transversely over the longitudinal airfoils (1), after flowing in a circuit in the support structure (3) and said generator (2), and the aerodynamic characteristics whereof enable conservation of a great part of the initial enthalpy of the inflow of air, the blades (10) of said array preferably being profiled and disposed in such a way as to generate lift complementary to that produced by said airfoils (1).

13. Device according to any of claims 1 to 12, **characterized in that** the airflow generator comprises at least two blowers (2A, 2B) the rotation directions of which are opposite so as to cancel out the overall gyroscopic torque of the blowers (2A, 2B).

14. Device according to any one of claims 1 to 13, **characterized in that** the blower or blowers (2; 2A, 2B) include(s) an inertial mass or a flywheel (2i) mounted on the same axis as the corresponding blower, and close to it, and driven in synchronous rotation or contrarotation.

15. Device according to any one of claims 1 to 14, **characterized in that** at least one blower (2) is a radial blower with blades (2b) inclined toward the rear relative to the direction of rotation of the blower.

16. Device according to any one of claims 1 to 15, **characterized in that** the radial blower or blowers (2; 2A, 2B) include(s) blades (2b) each of which is able to pivot about an axis substantially parallel to the rotation axis of the corresponding blower and the orientation whereof about the pivot axis is controlled, said blower blades (2b) being associated with a fixed diffuser including vanes (2g) each of which also pivots about a pivot axis parallel to that of said blower blades (2b), and the orientation of which about said pivot axis (Zi) is also controlled in such a way as to adapt the angles of incidence of the blower blades (2b) and the diffuser vanes (2g) to the required power, and in particular to reduce virtually to zero the power consumed by a blower, by pivoting of said blades (2b) and said vanes (2g) in such a way as to close the passages between them, to conserve standby energy, in the event of a malfunction, or to place a blower on standby during a flight phase.

17. Device according to any one of claims 1 to 16, **characterized in that** the airflow generated by the blower or blowers (2; 2A, 2B) to blow the longitudinal airfoils (1) has a speed in the range approximately 15 m/s to 100 m/s and preferably approximately 20 m/s to 70 m/s.

**18.** Device according to any one of claims 1 to 17, **characterized in that** the lower wall (3b) delimiting feed passages (3c) for the airflow for blowing the airfoils (1) in the support structure (3) include articulated traps (36) opening as a result of the pressure of a vertical ascending relative airflow ($\vec{Vz}$) to capture part of said relative airflow ($\overline{Vz}$) and to convert it into an airflow blowing the airfoils (1) to develop lift limiting the rate of descent of the device.

**19.** Device according to any one of claims 1 to 18, **characterized in that** it further comprises at least one axial blower with its axis parallel to or coinciding with the roll axis (X) and mounted at the front of the support structure (3) the axial outflow of air from which is partly captured in the axial inlet of passages (3e) formed in the support structure (3) and curved laterally so as to discharge laterally via vents (36, 37, 38, 39) for blowing the longitudinal airfoils (1), the part of the axial outflow of air from the axial blower or blowers (2C, 2D) not captured by the passages (3e) providing propulsion.

**20.** Device according to any one of claims 1 to 19, **characterized in that** each of the longitudinal airfoils (1) is arranged and disposed relative to the support structure (3) in such a way as to verify the following double condition: $0 \leq \dfrac{z0}{h} \leq 0.5$ and $0 \leq d \leq 10h$, where $h$ is the height of the airflow blowing an airfoil (1) and deflected upward by a certain angle, $h$ being measured perpendicularly to the direction of the deflected flow, $d$ is the distance between the leading edge of the airfoil (1) and the outlet section of said airflow from the support structure (3), this distance being measured parallel to the deflected flow, and z0 is the altitude of the extreme point of the leading edge of the airfoil (1) in the deflected airflow of height $h$.

**21.** Device according to any one of claims 1 to 20, **characterized in that** the length along the roll axis (X) of each longitudinal airfoil (1) is substantially equal, to within + or -20%, to $\dfrac{n}{2}$ times the circumference of a blower (2; 2A, 2B), n being the number of blowers, of substantially the same diameter, of the device, in particular in the case where the device comprises one or two blowers.

**22.** Vertical or short take-off and landing aerodyne, comprising a support structure (3) supporting a lift and propulsion device, **characterized in that** said device is a device according to any one of claims 1 to 21 supported in an upper part of said support structure (3), which is fitted out, in a lower part, as a nacelle (31) in particular accommodating a driving system (21) and disposed between two longitudinal lifting airfoils (1) of said device.

FIG. 1

FIG.1a

FIG.1b

FIG. 2

FIG. 3

FIG. 3a

FIG. 3b

FIG. 4

FIG. 4a

FIG. 5

EP 2 507 130 B1

FIG. 6

FIG. 6a

FIG. 6b

FIG. 6c

FIG. 7

FIG. 7a

EP 2 507 130 B1

$$\vec{V}_{cr} = 0$$

FIG. 8a

$$\vec{V}_1$$

4

$$\vec{V}_{cr}$$

$$\vec{V}_2$$

β2

1

$$k2\vec{V}_{cr}$$

$$k1\vec{V}_1$$

$$-\vec{V}_{cr}$$

FIG. 8b

4

β1

FIG. 9

FIG. 10

FIG. 11

EP 2 507 130 B1

FIG. 12a

FIG. 12b

# FIG. 13

EP 2 507 130 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4447028 A
- US 3124323 A
- US 3276723 A
- US 3785592 A
- US 5054713 A
- US 5170963 A
- US 6382560 B
- US 5503351 A
- US 3837600 A
- GB 951186 A
- GB 2321227 A